(19) **Europäisches Patentamt**

**European Patent Office**

**Office européen des brevets**

(11) **EP 4 573 922 A1**

(12) **EUROPEAN PATENT APPLICATION**

(43) Date of publication:
**25.06.2025 Bulletin 2025/26**

(21) Application number: **23307243.8**

(22) Date of filing: **18.12.2023**

(51) International Patent Classification (IPC):
**A23G 9/32** *(2006.01)*    **A23G 9/38** *(2006.01)*
**A23G 9/40** *(2006.01)*    **A23G 9/42** *(2006.01)*

(52) Cooperative Patent Classification (CPC):
**A23G 9/38; A23G 9/32; A23G 9/327; A23G 9/40;**
**A23G 9/42**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Standing Ovation**
**75014 Paris (FR)**

(72) Inventors:
• **CHAYOT, Romain**
  **PARIS (FR)**

• **RANGEL GEWANDSZNAJDER, Mayra**
  **PARIS (FR)**
• **CHENEBAULT, Manon**
  **FRESNES (FR)**

(74) Representative: **Cabinet Beau de Loménie**
**103, rue de Grenelle**
**75340 Paris Cedex 07 (FR)**

Remarks:
The complete document including Reference
Table(s) and the Sequence Listing(s) can be
downloaded from the EPO website

(54) **METHOD FOR PREPARING AN AERATED FROZEN PRODUCT**

(57)    The invention relates to a method for preparing an aerated frozen product from a mixture of ingredients suitable for preparing an aerated frozen product, wherein said mixture comprises casein in the sole form of non-animal origin.

## Description

### FIELD OF THE INVENTION

The invention relates to a method for preparing an aerated frozen product from a mixture of ingredients suitable for preparing an aerated frozen product, wherein said mixture comprises casein in the sole form of non-animal origin.

### BACKGROUND OF THE INVENTION

*The impact of dairy products on environment*

Environmental and ethical concerns related to food products of animal origin have raised over the last decades. The burden of animal breeding for a 7 billion population has become increasingly high. The environmental consequences are severe in terms of anthropogenic greenhouse gas (GHG) emissions, water consumption, pollution by effluents, land occupation, deforestation, and others.

Animal farming contributes to climate change by emitting greenhouse gases such as carbon dioxide, methane, and nitrous oxide. These gases trap heat in the atmosphere and cause global warming. According to a report by the Food and Agriculture Organization (FAO) of the United Nations, animal agriculture is responsible for about 14.5% of human-caused greenhouse gas emissions, which is more than the emissions from all global transportation (Rotz (2017) Modeling greenhouse gas emissions from dairy farms. J Dairy Science, Volume 101, pages 6675-6690).

According to a report by the FAO of the United Nations (FOOD AND AGRICULTURE ORGANIZATION OF THE UNITED NATIONs, *Greenhouse Gas Emissions from the Dairy Sector. A Life Cycle Assessment*), the global dairy sector alone contributes about 4% of the total human-induced greenhouse gas emissions. This includes emissions from feed production, enteric fermentation (the digestive process of ruminant animals), manure management, processing and transportation of milk and dairy products. The main greenhouse gases emitted by the dairy sector are carbon dioxide ($CO_2$), methane ($CH_4$), and nitrous oxide ($N_2O$). Methane is a particularly potent greenhouse gas, with a global warming potential 28 times higher than $CO_2$ over a 100-year period.

Global Pasture already represented in 2000 about 30 million $km^2$ (nearly the size of Africa), (Ramankutty, N., A. T. Evan, C. Monfreda, and J. A. Foley (2008), Farming the planet: 1. Geographic distribution of global agricultural lands in the year 2000, Global Biogeochem. Cycles, 22, GB1003). Land use for dairy production can lead to deforestation, biodiversity loss, soil erosion, and desertification. It can also compete with other land uses, such as food crops, biofuels, or natural habitats.

Livestock industries also have a very strong impact on water consumption, (Sultana et al. (2014), Comparison of water use in global milk production for different typical farms. Agricultural Systems, Volume 129, pages 9-21; Ercin and Aldaya (2012), The water footprint of soy milk and soy burger and equivalent animal products. Ecological Indicators, Volume 18, pages 392-402), and drain about 8% of global water supply, largely due to feed production (Schlink et al. (2010), Water requirements for livestock production: a global perspective; rev. Sci. tech. 29:603-619). A related environmental impact of dairy production is eutrophication, which is the enrichment of water bodies with excess nutrients, such as nitrogen and phosphorus. These nutrients can come from fertilizers used for feed crops, manure from animals, or wastewater from processing facilities. Eutrophication can also affect human health by contaminating drinking water sources or causing harmful algal blooms.

Animal farming also causes environmental problems such as deforestation, water pollution, soil degradation, and biodiversity loss. But in addition, animal welfare has become an increasingly important concern. The scale-up of meat and dairy production and processing has turned it into an intensive industrial process, which is increasingly perceived as ethically not acceptable.

While the extensive use of food of animal origin is raising very serious environmental and ethical concerns, there is in the sale time a growing demand for food. According to estimates by the Food and Agriculture Organization (FAO), by 2050, food production, including meat, will have to increase by 70% to feed a world population of 10 billion.

*Food transition and the alternative protein*

A transition to a diet less rich in animal-based products can reduce the recourse to cattle breeding.

Animal-free substitutes for meat and dairy are products that mimic the taste, texture, and nutritional value of animal products, but are made from plant-based or other non-animal ingredients. They are often referred to as vegan or plant-based alternatives.

In the case of dairy products, such alternative can also address other issues, related to health, such as lactose intolerances, allergies (Mousan and Kamat (2016) Cow's Milk Protein Allergy. Clin Pediatr (Phila), Volume 55(11) pages 1054-63; Manuyakorn and Tanpowpong (2018) Cow milk protein allergy and other common food allergies and intolerances. Paediatr Int Child Health, Volume 39(1), pages 32-40), and others, such as a high content in saturated fatty acids, known to have a potential negative impact on health. (Micha and Mozaffarian (2010) Saturated fat and cardiometabolic risk factors, coronary heart disease, stroke, and diabetes: A fresh look at the evidence. Lipids, Volume 45, pages 893-905; Jakobsen et al. (2009) Major types of dietary fat and risk of coronary heart disease: A pooled analysis of 11 cohort studies. Am. J. Clin. Nutr; Volume 89, pages 1425-1432; Nettleton et al (2017) Saturated fat consumption and risk of coronary heart disease and ischemic stroke: A science update. Ann Nutr Metab Volume 70, pages 26-33). Lactose intolerance is often due to the lack of lactase, the enzyme that degrades lactose in the stomach and small intestine, and results in an accumulation of lactose in the colon, and its digestion by bacteria (Ugidos-Rodríguez et al. (2018) Lactose malabsorption and intolerance: a review. Food Funct, Volume 9(8), pages 4056-4068). It is a very common feature in humans, may be genetically determined, and results in the need for a dairy-free diet. In a dairy-substitute product, this composition could be modulated, to avoid lactose, and saturated fatty acids, and even, allergenic proteins.

However, plant-based dairy-substitute products have often proven to fall very short from really mimicking the conventional dairy products both in terms of organoleptic and nutritional properties, and notably in terms of protein composition.

*Caseins*

Indeed, replicating dairy texture, dairy foaming property, dairy taste, while preserving nutritional composition only with plant-based dairy-substitute products is a challenging task. For example, plant-based dairy-substitute products are by definition voids of animal proteins, and therefore, do not contain caseins, milk's major protein, and a hallmark of most dairy products. Caseins represent more than 80% of cow's milk proteins, but bring also important functionalities such as curdling, melting and stretching. Mimicking both their nutritional input and texturing role is typically challenging.

The four major caseins, alpha-S1-, alpha-S2-, beta-, and kappa-caseins, represent more than 80% of cow's milk proteins, and nearly all of cheese proteins, since the other milk proteins (commonly named "whey proteins") such as beta-lactoglobulin, alpha-lactalbumin, bovine serum albumin, and immunoglobulins, are removed in whey after curdling. The solubility of caseins highly depends on pH, temperature and salt concentration (Post et al. (2012) Effect of temperature and pH on the solubility of caseins: Environmental influences on the dissociation of caseins. J. Dairy Sci. Volume 95: pages 1603-1616), but in milk, they are not found as soluble proteins, but organized in micelles, resulting in a colloidal structure. Casein micelles are roughly spherical particles ranging from 50 to 600 nm in diameter, with an average diameter of around 200 nm (de Kruif (1998), Supra-aggregates of casein micelles as a prelude to coagulation J Dairy Sci, Volume 81 pages 3019-3028; de Kruif et al. (2012) Casein micelles and their internal structure. Advances in Colloid and Interface Science, Volume 171-172, pages 36-52). The evolution of this colloid into a curd is at the basis of cheese production (Gillis JC, Ayerbe A, Le fromage 4ème edition, Lavoisier - Technique Et Documentation, 20 avril 2018). It is believed that κ-casein has a key role as a stabilizer of the micelle structure.

Caseins can be isolated from milk as sodium, calcium or potassium caseinates, by neutralization after acid-mediated or rennet-mediated coagulation (Sarode et al. (2016) Methods of Manufacture. In: Caballero, B., Finglas, P., and Toldrá, F. (eds.) The Encyclopedia of Food and Health vol. 1, pp. 676-682. Oxford: Academic Press) The different individual caseins (alpha-S1-, alpha-S2-, beta-, or kappa-caseins) can also be purified individually from bulk casein preparations, based on their different physico-chemical properties, using membrane filtration at low temperature (Murphy and Fox (1991) Fractionation of sodium caseinate by ultrafiltration. Food Chem. Volume 39 Pages 27-38; Ward and Bastian (1996) A method for isolating β-casein. J. Dairy Sci. Volume 79, pages 1332-1339; Huppertz et al. (2006) A method for the large-scale isolation of β-casein. Food Chem. Volume 99, pages 45-50; Lamot et al. (2007). Short communication: Extraction of β-casein from goat milk. J. Dairy Sci. Volume 90, pages 5380-5382; O'Mahony, et al. (2007). Purification of β-casein from milk. US Pat. No. 0104847 A1) or selective precipitation (Law and Leaver (2007) Methods of extracting casein fractions from milk and caseinates and production of novel products. Hanna Research Institute, assignee. WO Pat. No. 03003847; Post et al. (2009) β-Casein as a bioactive precursor-Processing for purification. Aust. J. Dairy Technol. Volume 64, pages 84-88; Post and Hinrichs (2011) Large-scale isolation of food-grade β-casein. Milchwissenschaft, Volume 66, pages 361-364).

*Precision fermentation*

In order to more closely match dairy product compositions, with no recourse, or less recourse to animal-product, specific compounds can also be produced by precision fermentation. Production by fermentation is based on the growth of bacteria or fungi producing a compound of interest in a fermenter, usually followed by the recovery and purification of the compound of interest. The making of proteins by fermentation is a process that has been used in the food industry, with one of the first examples being recombinant chymosin, the first artificially produced enzyme to be registered and allowed by the US Food and Drug Administration and represents today a large part (more 80% in the US today) of the rennet market. (Food Biotechnology in the United States: Science, Regulation, and Issues". U.S. Department of State. Retrieved 2006-08-14).

Several studies have described the production by fermentation in various microorganisms of milk's proteins, including caseins, whey proteins such as beta-lactoglobulins, and the use or potential use to make animal-free dairy substitutes, together with plant-based other ingredients:

- WO1991008675 describes the production of recombinant proteins for infant formula.

- WO2016029193 describes the general principle of using recombinant milk's protein in food applications, and gives a formula for cream and milk.

- WO2018039632 describes the mixing of fermentation caseins and plant-based proteins.

- WO2020219596 describes the production of recombinant beta-lactoglobulin.

- WO2020223700 describes the use of alpha-S1 and kappa casein, without beta casein, to make micelles, and curds for cheese and yogurt applications.

- WO2022098835 describes the mixing caseins from different animals, and their use for making micelles, curds and cheese substitutes.

- WO2022098853 describes the mixing of alpha-S1 and kappa casein caseins to make micelles, one being recombinant, and their use for making micelles, curds and cheese substitutes

- WO2022038601 describes general methods to make micelles.

- WO2022239000 describes the production of beta lactoglobulin in *Pichia pastoris,* and products made thereof.

- WO2023133417 describes the mixing of recombinant caseins and lipids made by fermentation, wherein the lipid is not necessarily recombinant, and describes production processes for caseins and lipids.

- WO2022058573 describes cheese substitutes made from recombinant casein.

- WO2022253816 describes a method to produce caseins by precision fermentation, and the use of these caseins for making cheese substitutes.

*Specific problem to be solved*

Dairy-substitute beverage, such as milk-substitutes (also known as plant-based milks or plant-based milk-substitutes), are designed to replace dairy beverage, such as milk, in both drinking and cooking applications. They are expected to have a low environmental impact, but also a good nutritional profile, and some are fortified with vitamins and minerals to match the nutritional content of dairy beverage, such as dairy milk.

There's a wide variety of milk-substitutes available, including almond milk, soy milk, rice milk, oat milk, and many others. Each has its own unique taste and nutritional profile. They also provide the opportunity to bypass the risks of lactose intolerance (by replacing lactose with other carbohydrates). These products had the highest market penetration among dairy substitutes, i.e. 15% of total milk beverages in 2022 (The Good Food Institute, 2022 State of the Industry Report, Plant-based meat, seafood, eggs, and dairy), in spite of strong differences observed between dairy milk and products such as oat milk for example.

However, getting closer to milk properties is the best way to secure further success. Aerating properties are an important aspect of mixtures of ingredients used to prepare aerated frozen product, especially in the context of plant-based mixtures of ingredients used to prepare ice cream-substitutes, sorbets, or frozen yogurt-substitutes.

In dairy milk, milk proteins stabilize the air bubbles in milk foams. The process of aeration in beverages, which is manifested as foam or bubbles, increases the sensory preference among consumers (Deotale et al. Characteristics of beverages and Its Relevance to Food Processing. Food Eng Rev 12, 229-250 (2020)).

Milk's proteins and notably caseins, are known for their foaming and emulsifying properties (Mohanytu et al. Emulsifying and Foaming Properties of Acidic Caseins and Sodium Caseinate, Food Chemistry 28 (1988) 17-30; Gauding et al. Engineering of caseins and modulation of their structures and interactions, Biotechnology Advances 27 (2009) 1124-1131; Dickinson, Interfacial, Emulsifying and foaming properties of milk proteins, Advanced Dairy Chemistry Volume 1: ProTeins. 3rd ed, Edited by P.F. Fox and P.L.H. McSweeney. Kluwer Academic/Plenum Publishers. 2003; Broyard and Gaucheron, Modifications of structures and functions of caseins: a scientific and technological challenge, Dairy Sci. & Technol. (2015) 95:831-862). However, both caseins and whey are missing in plant-based milk, often at the expense of aerating properties.

The air content in frozen products (called overrun), such as ice cream, affects the taste, texture and appearance of the finished product. Higher aeration will produce a tastier and smoother frozen product. In ice cream, emulsifier and stabilizers are common additives, yet, milk proteins themselves have an important role in the aerating process (Pei and Schmidt (2010) Ice cream: foam formation and stabilization - A review. Food Reviews International, 26:122-137). Therefore, frozen products, such as ice-cream substitutes, made from dairy-substitutes may have a low overrun which affects the taste, texture and appearance of the finished product. Similarly, sorbets, which are made from plant-based ingredients, have generally a low overrun compared to ice-creams, which are made from milk (Petkova et al. (2022) Characterization of Fruit Sorbet Matrices with Added Value from Zizyphus jujuba and Stevia rebaudiana. Foods. 2022 Sep; 11(18): 2748).

There is a need for alternative natural food-additive for improving the aerating property of aerated frozen products, such as plant-based aerated frozen product.

*Proposed solution*

We tested the impact of caseins made by microbial fermentation for their aerating impact in the preparation of an aerated frozen product made from a mixture of ingredients of non-animal origin.

Surprisingly, we found that addition of caseins made by microbial fermentation into a plant-based mixture of ingredients can significantly improve aeration of the plant-based mixture during a process for preparing of a frozen product. It is therefore possible to obtaining a frozen product having an increased overrun compared to a frozen product prepared from the plant-based mixture without addition of caseins made by microbial fermentation.

## SUMMARY OF THE INVENTION

We found that a small amount of casein in the sole form of non-animal origin was sufficient to obtain aerated frozen products having a significant overrun, even with mixtures of ingredients that are known to have a low or no foaming property.

A first object of the present invention relates to a method for preparing an aerated frozen product comprising the steps of:

a) providing a mixture of ingredients suitable for preparing an aerated frozen product, wherein said mixture comprises casein in the sole form of non-animal origin;

b) forming an aerated frozen product from the mixture of ingredients;

wherein the aerated frozen product has an overrun of at least 20%.

A second object of the present invention relates to an aerated frozen product obtainable by the process as described herein, said aerated frozen product comprising casein in the sole form of non-animal origin, wherein the aerated frozen product has an overrun of at least 20%.

In some embodiments, the mixture comprises ingredients in the sole form of non-animal origin.

In some embodiments, the mixture comprises a dairy-substitute product.

In some embodiments, the mixture is prepared by incorporating casein in the sole form of non-animal origin into a dairy-substitute product.

In some embodiments, the mixture comprises a dairy-substitute product selected from the group consisting of a milk-substitute, a yogurt-substitute, a cream-substitute, or a combination thereof.

In some embodiments, the aerated frozen product is selected from the group consisting of an ice cream-substitute, a sorbet, a frozen yogurt-substitute.

In some embodiments, the mixture comprises from 0.1 % to 10 % of casein of non-animal origin.

In some embodiments, the casein of non-animal origin is one, two or three casein selected from the group consisting of alpha-S1 casein, alpha-S2 casein, beta casein and kappa casein.

In some embodiments, the casein of non-animal origin is alpha-S1 casein, beta casein, a mixture of alpha-S1 casein and beta casein, a mixture of alpha-S1 casein and alpha-S2 casein, or a mixture of beta casein, alpha-S1 casein and alpha-S2 casein.

In some embodiments, the mixture does not comprise at least one casein protein selected from the group consisting of alpha-S1 casein, alpha-S2 casein, beta casein and kappa casein.

In some embodiments, the mixture does not comprise kappa casein.

In some embodiments, at least 50% of the casein is caseinate, such as 1, 2, 3 or 4 caseinate(s) selected from the group consisting of sodium caseinate, calcium caseinate, potassium caseinate, and magnesium caseinate.

In some embodiments, at least 50% of the casein of the mixture is caseinate, such as 1, 2, 3 or 4 caseinate(s) selected from the group consisting of sodium caseinate, calcium caseinate, potassium caseinate, and magnesium caseinate.

In some embodiments, the mixture has a protein content from 0.5 % to 30 %.

In some embodiments, the mixture has a lipid content from 0 % to 30 %.

In some embodiments, the mixture does not comprise mono- and diglycerides of fatty acids (E471), locust bean gum/flour (known as E410), sodium alginate (known as E401), guar gum (known as E412) and carrageenan (known as E407).

## DETAILED DESCRIPTION

### *Definitions*

In the context of the invention, the term *"(w/w)"* means weight/weight, on the total weight (mention is made when the quantities are evaluated on dry matter).

In the context of the invention, the term "dairy product", means food product made from (or containing) dairy milk. A dairy product is preferably chosen from the group consisting of milk (i.e. dairy milk), yogurt (i.e. dairy yogurt) and cream (i.e. dairy cream).

The term "dairy milk" as used herein refers to a white fluid secreted by the mammary glands of female mammals. Dairy milk consists of an emulsion of fat in an aqueous solution comprising proteins (e.g., casein, albumin), sugars, inorganic salts, and other ingredients. Suitable mammals from which dairy milk can be obtained include but are not limited to cow, sheep, goat, buffalo, donkey, horse, camel, yak, water buffalo, human, and other mammals. Dairy milk obtained from cow typically contains around 3.5%-3.9% fat (whole cow milk). Fat levels can be reduced to standardized levels to obtain different grades of cow milk that comprise from 0% to about 75% by weight of the fat present in whole cow milk, including but not limited to 2% cow milk (cow milk comprising 2% by weight of fat), 1% cow milk (cow milk comprising 1% by weight of fat), and skim cow milk (cow milk comprising no fat).

In the context of the invention, the term "dairy-substitute product" means a product designed to mimic the sensory characteristics and functional properties of a dairy product, while being made from ingredients of non-animal origin. Dairy-substitute products are formulated from non-animal sources, typically plant-based sources, to mimic taste, texture, and/or functionality of their dairy counterparts. Dairy-substitute products can be used in various culinary applications and serve as alternatives to traditional dairy products.

In the context of the invention, the term "milk-substitute" means a liquid that resembles dairy milk but being made from ingredients of non-animal origin. For example, a milk-substitute has one or more of the following: substantially similar (or similar) color, taste, nutritional content, and other quality as dairy milk. A milk-substitute is formulated from non-animal sources, typically plant-based sources. Typically, milk-substitutes include their main ingredients from plant-based sources.

In the context of the invention, the term "yogurt-substitute" means a yogurt that resembles dairy yogurt but being made from ingredients of non-animal origin. For example, a yogurt-substitute has one or more of the following: substantially similar (or similar) color, taste, nutritional content, and other quality as drinking dairy yogurt. A yogurt-substitute is formulated from non-animal sources, typically from plant-based sources, such as from milk-substitutes, and eventually from plant-based oil. Typically, yogurt-substitutes include their main ingredients from plant-based sources, such as from plant-based milk-substitutes.

In the context of the invention, the term "cream-substitute" means a cream that resembles dairy cream but being made from ingredients of non-animal origin. For example, a cream-substitute has one or more of the following: substantially similar (or similar) color, taste, nutritional content, and other quality as drinking dairy cream. Cream-substitute is formulated from non-animal sources, typically from plant-based sources, such as from milk-substitutes, and eventually from plant-based oil. Typically, cream-substitutes include their main ingredients from plant-based sources, such as from plant-based milk-substitutes.

In the context of the invention, the term "mixture of ingredients suitable for preparing an aerated frozen product" means any conventional mix that can be aerated and frozen for the preparation of an aerated frozen product, such as an ice cream-substitute mix, a frozen yogurt-substitute mix, a fruit juice mix, a sherbet mix, a sorbet mix or a combination thereof with the casein in the sole form of non-animal origin. Such mixture may contain fat, carbohydrates, and stabilizers together with water and, if desired, other conventional ingredients as disclosed below, such as mineral salts, sweeteners, colorants, flavorings, inclusions, etc.

In the context of the invention, the mixture of ingredients suitable for preparing an aerated frozen product according to the invention (i.e. comprising casein in the sole form of non-animal origin) has an improved aerating property compared to the same mixture that does not comprise casein in the sole form of non-animal origin.

In the context of the invention, the term "plant oil" or "plant-based oil" or "vegetable oil" means oil extracted from plant source.

In the context of the present invention, the term "casein" designates one or more casein selected from the group consisting in alpha-S1-, alpha-S2-, beta-, or kappa-casein.

In the context of the present invention, the term "casein composition" designates a composition which contains casein. Such casein composition can be solid or liquid and contains at least one casein as defined above. Such solid casein composition is preferably a spray-dried casein composition. Such casein composition can result from the purification of casein from the production of caseins by microbial cultures and subsequent purification. Such casein composition can comprise other compounds, notably calcium, other proteins, lipids, carbohydrates, and others. A casein composition produced by a microbial culture (microbial fermentation) is a casein composition comprising casein in the sole form of non-animal origin.

In the context of the present invention, the term "of non-animal origin" means a compound or composition which has not been directly derived from an animal, produced from animal cells in culture, or isolated from animal products such as milk. Proteins produced in a microorganism by precision fermentation are thus "of non-animal origin" even though some products derived from animals, such as bacto peptone, or even waste from the dairy industry, can be used in the fermentation medium of the microorganism. Therefore, in the context of the invention, a protein that is naturally produced in animals will be called of non-animal origin when it is produced in a microorganism (such as bacteria or yeast) or in non-animal cells, such as in plant cells, even though its sequence or structure may be identical to the sequence or structure of the protein that would be isolated from animal.

In the context of the present invention, the term "animal-free" means a compound or composition which has not been derived from an animal, from animal cells in culture, or from animal products such as milk, and whose production process does not involve any feedstock or additive of animal origin.

In the context of the present invention, the term "fermentation" designates the process used for the production of a compound of interest, comprising the steps of growing a cellular culture producing the compound of interest in a fermenter, and recovering the compound of interest. In the case of microbial fermentation, bacteria or fungi (such as yeasts) are used for production.

In the context of the present invention, the term "recombinant" means that the organism or microorganism, is genetically modified so as to contain a nucleic acid molecule encoding at least a protein, as compared to a wild-type or non-modified organism or microorganism.

In the context of the present invention, the term "aerated" refers to a product which has been adapted, developed, or prepared to include air or gas bubbles (i.e. typically, although not solely, atmospheric air or nitrogen) dispersed homogenously within, or just within a portion of, the product for a period of time.

In the context of the present invention, the term "forming an aerated frozen product" consists in dispersing and stabilizing by freezing a gas phase (i.e. typically, although not solely, nitrogen or atmospheric air) in the form of tiny bubbles within, or just within a portion of a product matrix. Aerating can be performed, for example, by "whipping". Aerating processes can be performed batchwise or continuously. Regarding aerated frozen product, such as ice creams or sorbets, forming an aerated frozen product may be performed by batch using ice cream makers (Pei and Schmidt (2010) Ice cream: foam formation and stabilization - A review. Food Reviews International, 26:122-137). Continuous formation of an aerated frozen product is generally performed on an industrial scale, for instance using industrial equipment for aerating and freezing food products. The properties of the aerated frozen product depend on the aerating operation, gas fraction, the bubble size distribution, as well as on the distribution of the ingredients between the bulk and the gas-product interface. Aeration requires mechanical energy to help create the bubbles and/or requires gas (e.g. $N_2O$) under pressure to help create the bubbles. An aerated frozen product can be formed by aerating and, simultaneously or sequentially, freezing a mixture of ingredients suitable for preparing an aerated frozen product, such as using an ice cream maker. The ice cream maker can form an aerated frozen product by simultaneously aerating and freezing a mixture of ingredients suitable for preparing an aerated frozen product.

In the context of the present invention, the term "aerating property" corresponds to the ability of a product to form and stabilize a gas phase (i.e. typically, although not solely, nitrogen or atmospheric air) in the form of tiny bubbles within the product matrix. The air content in an aerated frozen product is evaluated by determining the parameter called "overrun".

In the context of the present invention, the term "overrun" means the volume increase of a product because the gas incorporated into said product. The overrun may be measured by comparing the weight of a given volume of a product before aerating (e.g. the weight of a given volume of a mixture of ingredients suitable for preparing an aerated frozen product) and the weight of the same volume after aerating (e.g. the weight of the same volume of the aerated frozen product) (Lim et al. (2008) High Hydrostatic Pressure modification of whey protein concentrate for Improved Functional Properties, Journal of Dairy Science Vol. 91 No. 4, 2008; O'Chiu and Vardhanabhuti (2017) Utilizing whey protein isolate and polysaccharide complexes to stabilize aerated dairy gels. Journal of Dairy Science Vol. 100 No. 5). Therefore, for an aerated frozen product, the overrun may be calculated according to the following formula:

$$\% \ overrun = (weight \ W \ of \ a \ volume \ V \ of \ a \ mixture \ of \ ingredients \ suitable \ for$$

$$preparing \ an \ aerated \ frozen \ product - weight \ W \ of \ the \ same \ volume \ V \ of \ the \ aerated$$

$$frozen \ product) \ / \ weight \ W \ of \ the \ same \ volume \ V \ of \ the \ aerated \ frozen \ product) \ x \ 100$$

The overrun may also be measured by comparing the volume V of a given weight W of product before aerating (e.g. the volume of a given weight of a mixture of ingredients suitable for preparing an aerated frozen product) and the volume of the same weight W after aerating (e.g. the weight W of the same volume V of the aerated frozen product) (Raymundo et al. (1998) Method to evaluate foaming performance. Journal of Food Engineering 36:445-452), Therefore, for a frozen product, the overrun may also be calculated according to the following formula:

$$\% \ overrun = (volume \ V \ of \ a \ mass \ M \ of \ aerated \ frozen \ product - volume \ V \ of \ the \ same$$

$$mass \ M \ of \ the \ mixture \ of \ ingredients \ suitable \ for \ preparing \ an \ aerated \ frozen \ product)$$

$$/ \ volume \ V \ of \ the \ same \ mass \ M \ of \ the \ mixture \ of \ ingredients \ suitable \ for \ preparing \ an$$

$$aerated \ frozen \ product) \ x \ 100$$

The two formula, based on differences of weight W for a given volume V and based on differences of volume V for a given weight W, are actually equivalent.

The term "volume increase after aerating" means the difference between the total volume of a liquid product after aerating (foam and liquid) and the total volume of the liquid product before aerating, normalized by the total volume of the liquid product before aerating:

$$Volume \ V \ increase \ after \ aerating \ (\%) = ((Total \ volume \ V \ after \ aerating - Total$$

$$volume \ V \ before \ aerating) \ / \ Total \ volume \ V \ before \ aerating) \ x \ 100$$

The volume V increase after aerating can be measured as detailed in the Examples.

The terms "glycosylation" and "glycosylated" as used herein refer to the attachment to proteins of glycan groups (i.e., monosaccharides, disaccharides, polysaccharides, linear glycans, branched glycans, glycans with galf residues, glycans with sulfate and/or phosphate residues via C-linkage, N-linkage, or O-linkage, or via glypiation or phosphoglycosylation. Non-limiting examples of such glycan groups include D-glucose, D-galactose, D-mannose, L-fucose, N-acetyl-D-galactose amine, N- acetyl-D-glucose amine, N- acetyl-D-neuraminic acid, galactofuranose, phosphodiesters, acetylglucosamine, acetylgalactosamine, and sialic acid. The terms "phosphorylation" and "phosphorylated" as used herein refer to the attachment to proteins of phosphate groups.

## *Method of the invention*

A first object of the present invention relates to a method for preparing an aerated frozen product comprising the steps of:

a) providing a mixture of ingredients suitable for preparing an aerated frozen product, wherein said mixture comprises casein in the sole form of non-animal origin;

b) forming an aerated frozen product from the mixture of ingredients;

wherein the aerated frozen product has an overrun of at least 20%.

## *Step a)*

Step a) consists in preparing a mixture of ingredients suitable for preparing an aerated frozen product (hereafter the "mixture"), wherein the mixture comprises casein in the sole form of non-animal origin.

*Casein in the sole form of non-animal origin*

In the context of the present invention, the mixture of ingredients suitable for preparing an aerated frozen product (hereafter the "mixture") comprises casein in the sole form of non-animal origin.

In some embodiment, a casein composition comprising casein in the sole form of non-animal origin is used to prepare the mixture of ingredients suitable for preparing an aerated frozen product. Said composition is mixed with the other ingredients of the mixture. In some embodiments, the casein of non-animal origin represents more than 50% of the proteins of the casein composition comprising casein in the sole form of non-animal origin. In a preferred embodiment, the casein of non-animal origin represents at least 60%, at least 70%, at least 75%, at least 80%, at least 85%, at least 90%, at least 91%, at least 92%, at least 93%, at least 94%, at least 95%, at least 96%, at least 97%, at least 98%, or at least 99% of the proteins of the casein composition. The amount of proteins can be measured by any method known in the art. The casein composition comprising casein in the sole form of non-animal origin may contain other components than casein, such as other proteins, carbohydrates and/or lipids. This is particularly true when said casein composition results from a culture of recombinant microorganisms expressing casein (microbial fermentation).

In some embodiments, casein of non-animal origin represents the major part of dry weight of the casein composition, for example casein of non-animal origin represents at least 25 % w/w of the casein composition, for example at least 50% w/w of the casein composition, such as at least 60% w/w, at least 70% w/w, at least 75% w/w, at least 80% w/w, at least 85% w/w, at least 90% w/w, or at least 91% w/w, at least 92% w/w, at least 93% w/w, at least 94% w/w, at least 95% w/w, at least 96% w/w, at least 97% w/w, at least 98% w/w, or at least 99% w/w of the casein composition. The percentage of casein in the casein composition corresponds to the mass of casein divided by the total dry mass of the casein composition. In some embodiments, the casein composition is a spray-dried casein composition.

In some embodiments, the casein of non-animal origin is one, two or three casein(s) selected from the group consisting of alpha-S1 casein, alpha-S2 casein, beta casein, and kappa casein.

In some embodiments, the casein of non-animal origin is alpha-S1 casein, beta casein, a mixture of alpha-S1 casein and beta casein, or a mixture of alpha-S1 casein and alpha-S2 casein, or a mixture of beta casein, alpha-S1 casein, and alpha-S2 casein.

In some embodiments, the mixture does not comprise at least one casein protein selected from the group consisting in of alpha-S1 casein, alpha-S2 casein, beta casein, and kappa casein.

In some embodiments, the mixture does not comprise kappa casein.

In some embodiments, the mixture contains at least one casein selected from the group consisting of alpha-S1 casein, alpha-S2 casein, beta casein and kappa casein.

In some embodiments, the mixture contains at least two caseins selected from the group consisting of alpha-S1 casein, alpha-S2 casein, beta casein and kappa casein.

In some embodiment, the mixture contains at least three caseins selected from the group consisting of alpha-S1 casein, alpha-S2 casein, beta casein and kappa casein.

In some embodiments, at least one casein of non-animal origin selected in the group consisting of alpha-S1 casein, alpha-S2 casein, beta casein and kappa casein is not present in the mixture. Preferably, kappa casein is not present in the mixture. In some embodiments, the mixture contains only beta casein. In some other embodiments, the mixture contains only beta and alpha-S2 caseins. In some other embodiments, the mixture contains only beta and alpha-S1 caseins. In some other embodiments, the mixture contains only beta, alpha-S1 and alpha-S2 caseins.

In some embodiments, the mixture contains only beta casein and alpha-S1 casein, preferably with a ratio beta casein to alpha-S1 casein from 80:20 to 20:80, such as from 70:30 to 30:70, such as from 60:40 to 40:60, for example about 60:40 or about 50:50 or about 40:60.

In some embodiments, at least 50% of the casein of the mixture is beta casein, such as at least 55%, at least 60%, at least 65%, at least 70%, at least 75%, at least 80%, at least 85%, at least 90%, at least 95%, or even 100% of the casein of the mixture is beta casein.

Indeed, the inventors have shown that it is possible to improve the aerating property of a mixture of ingredients of non-animal origin suitable for preparing an aerated frozen product, such as a mixture comprising a dairy-substitute product, with casein of non-animal origin, without kappa casein, so that the inventors did not try to reconstitute micelle formation, or check whether the solution actually presents micelles.

In some embodiments, at least 50% of the casein of the mixture is micellar casein such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is micellar casein.

In some embodiments, at least 50% of the casein of the mixture is non-micellar casein such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is non-micellar casein.

In some embodiments, at least 50% of the casein of the mixture is caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is caseinate. In a preferred embodiment, almost 100% of the casein of the mixture is caseinate. Caseinate may be 1, 2, 3 or 4 caseinate(s) selected from the group consisting of sodium caseinate, calcium caseinate, potassium caseinate, and magnesium caseinate.

In some embodiments, at least 50% of the casein of the mixture is 1, 2, 3 or 4 caseinate(s) selected from the group consisting of sodium caseinate, calcium caseinate, potassium caseinate, and magnesium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is 1, 2, 3 or 4 caseinate(s) selected from the group consisting of sodium caseinate, calcium caseinate, potassium caseinate, and magnesium caseinate.

In some embodiments, at least 50% of the casein of the mixture is sodium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is sodium caseinate.

In some embodiments, at least 50% of the casein of the mixture is calcium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is calcium caseinate.

In some embodiments, at least 50% of the casein of the mixture is potassium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is potassium caseinate.

In some embodiments, at least 50% of the casein of the mixture is magnesium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is magnesium caseinate.

In some embodiments, at least 50% of the casein of the mixture is a mix of 2, 3 or 4 caseinates selected from the group consisting of sodium caseinate, calcium caseinate, potassium caseinate, and magnesium caseinate, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is a mix of 2, 3 or 4 caseinates selected from the group consisting of sodium caseinate, calcium caseinate, potassium caseinate, and magnesium caseinate, such as a mixture of sodium caseinate and calcium caseinate.

In some embodiments, at least 50% of the casein of the mixture is acid casein, such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is acid casein.

In some embodiments, at least 50% of the casein of the mixture is a mix of caseinate(s) and acid casein(s), such as at least 60%, such as at least 70%, such as at least 80%, such as at least 90%, such as at least 91%, such as at least 92%, such as at least 93%, such as at least 94%, such as at least 95%, such as at least 96%, such as at least 97%, such as at least 98%, such as at least 99%, such as 100% of the casein of the mixture is a mix of caseinate(s) and acid casein. In these embodiments, the caseinate may be 1, 2, 3 or 4 caseinate(s) selected from the group consisting of sodium caseinate, calcium caseinate, potassium caseinate, and magnesium caseinate.

In some embodiments, the casein of the mixture is a mix of calcium caseinate and sodium caseinate. For example, the ratio calcium caseinate and sodium caseinate is from 80:20 to 20:80, such as from 70:30 to 30:70, such as from 60:40 to 40:60, for example about 60:40 or about 50:50 or about 40:60.

Casein of non-animal origin can be produced, by fermentation technologies. Several studies have described the production of milk's constitutive proteins or homologues by fermentation in various microorganisms (Goda et al. (2000) Recombinant expression analysis of natural and synthetic bovine alpha-casein in Escherichia coli. Appl Microbiol Biotechnol, Volume 54, pages 671-676; Kim et al. (1997) High-level expression of bovine beta-lactoglobulin in Pichia pastoris and characterization of its physical properties. Protein Eng, Volume 10 (11), pages 1339-45; Kim et al. (2005) Production of human caseinomacropeptide in recombinant Saccharomyces cerevisiae and Pichia Pastoris, J Ind Microbiol. Biotechnology, Volume 32, pages 402-408; Choi BK and Jimenez-Flores R (2001) Expression ad purification of Glycosylated Bovine b-casein (L70S/P71S) in Pichia Pastoris. J Agric Food Chem, Volume 49, pages 1761-1766; Viaene et al. (1991) Efficient expression of bovine alpha-lactalbumin in Saccharomyces cerevisiae. Eur J Biochem, Volume 202(2), pages 471-7; US6,232,094; WO2013/148328; US2010/0223682; US5,942,274; WO2018039632) or plant cells (US20100119691; WO2022253816).

In some embodiments, the casein of non-animal origin is produced by fermentation of a recombinant microorganism. For example, said casein is produced by fermentation of recombinant microorganism, such as fungus (yeast) or bacterium. In a preferred embodiment, said casein is produced by fermentation of a recombinant microorganism chosen among *Escherichia coli, Bacillus subtilis, Salmonella typhimurium, Saccharomyces cerevisiae, Kluyveromyces lactis, Pichia Pastoris,* or *Trichoderma reseei,* or in a microorganism chosen in the *Saccharomyces, Kluyveromyces, Pichia, Zygosaccharomyces, Candida,* or *Trichoderma* genus of fungi.

Such recombinant microorganism can be obtained by the introduction of a nucleic acid molecule encoding one or several caseins, alone or as part of a vector. The nucleic acid molecules can further comprise expression control sequences operably linked to the polynucleotide comprised in the nucleic acid molecule. The term "operatively linked" or "operably linked", as used throughout the present description, refers to a linkage between one or more expression control sequences and the coding region in the polynucleotide to be expressed in such a way that expression is achieved under conditions compatible with the expression control sequence. Regulatory elements ensuring expression in fungi as well as in bacteria, are well known to those skilled in the art. They encompass promoters, enhancers, termination signals, targeting signals and the like. Promoters for use in connection with the nucleic acid molecule may be homologous or heterologous with regard to its origin and/or with regard to the gene to be expressed. Suitable promoters are for instance promoters which lend themselves to constitutive expression. However, promoters which are only activated at a point in time determined by external influences can also be used. Artificial and/or chemically inducible promoters may be used in this context. For genetically modifying bacteria or fungi, the polynucleotides encoding one or several caseins can be introduced into plasmids.

Thus, in accordance with the present invention, a recombinant organism or microorganism is produced by genetically modifying fungi or bacteria comprising introducing the above-described polynucleotides, nucleic acid molecules or vectors into a fungus or bacterium. An overview of different expression systems is for instance contained in Baghban et al. Yeast Expression Systems: Overview and Recent Advances. Mol Biotechnol. 2019 May;61(5):365-384; Yang and Zhang. Engineering strategies for enhanced production of protein and bioproducts in Pichia pastoris: A review. Biotechnol. Adv. 2018 Jan-Feb;36(1): 182-195.; Mojzita et al. Gene expression engineering in fungi. Curr. Opin. Biotechnol. 2019 Oct;59: 141-149.; Gómez et al. Alternative Eukaryotic Expression Systems for the Production of Proteins and Protein Complexes. Adv Exp Med Biol. 2016;896:167-84.; Freudl. Signal peptides for recombinant protein secretion in bacterial expression systems. Microb Cell Fact. 2018 Mar 29;17(1):52.; Cui et al. Exploitation of Bacillus subtilis as a robust workhorse for production of heterologous proteins and beyond. World J Microbiol Biotechnol. 2018 Sep 10;34(10):145.; Chen. Bacterial expression systems for recombinant protein production: E. coli and beyond. Biotechnol Adv. 2012 Sep-Oct;30(5): 1102-7; Deckers et al., Genetically Modified Micro-Organisms for Industrial Food Enzyme Production: An Overview. Foods 2020, 9, 326. The host cell is cultured in nutrient media meeting the requirements of the particular host cell used, in particular in respect of the pH value, temperature, salt concentration, aeration, antibiotics, vitamins, trace elements, etc..

In a preferred embodiment, casein of non-animal origin is prepared as detailed in Example 1.

Caseins are known in the art. One can cite, as illustrations, the caseins that are present in Uniprot or Genbank. Examples of such caseins are given in the table below.

**Table 1:** examples of casein types from cow (*Bos taurus*), goat (*Capra hircus*), sheep (*Avis aries*) and buffalo (*Bubalus bubalis*).

| Uniprot | casein type | origin |
|---|---|---|
| P02662 | alpha-S1 | *Bos taurus* |
| A0A3Q1MJE5 | alpha-S1 | *Bos taurus* |
| A0A3Q1NG86 | alpha-S1 | *Bos taurus* |
| P02663 | alpha-S2 | *Bos taurus* |
| P02666 | beta | *Bos taurus* |
| P02668 | kappa | *Bos taurus* |
| P18626 | alpha-S1 | *Capra hircus* |
| P33049 | alpha S2 | *Capra hircus* |
| P33048 | beta | *Capra hircus* |
| P02670 | kappa | *Capra hircus* |
| P04653 | alpha-S1 | *Ovis aries* |

(continued)

| Uniprot | casein type | origin |
|---------|-------------|--------|
| P04654 | alpha-S2 | *Ovis aries* |
| P11839 | beta | *Ovis aries* |
| P02669 | kappa | *Ovis aries* |
| 062823 | alpha-S1 | *Bubaius bubalis* |
| B6VPY3 | alpha-S2 | *Bubaius bubalis* |
| B7VGH4 | beta | *Bubaius bubalis* |
| P11840 | kappa | *Bubaius bubalis* |

Such casein usually includes a signal peptide, which is not present in the mature protein. For example, SEQ ID NOs 1-4 correspond to mature caseins from cow, i.e. alpha-S1 (SEQ ID NO 1), alpha-S2 (SEQ ID NO 2), beta (SEQ ID NO 3) and kappa (SEQ ID NO 4). It is possible to use, in the casein composition, fragments of casein proteins (in particular the mature caseins for which signal peptide is not present), or proteins that are homologous to natural caseins and having casein-like properties. Typically caseins made by precision fermentation will have an additional methionine as first amino acid, a consequence of the expression of the protein from a classical expression system, wherein the translation initiation codon codes for a methionine.

In some embodiments, the casein of non-animal origin is:

- identical to one of the above sequences, or

- at least n % identical to one of these sequences, with n being an integer from 80 to 100, such as 80, 85, 90, 91, 92, 93, 94, 95, 96, 97, 98 or 99.

In some embodiments, the casein of non-animal origin has non-native phosphorylation pattern. A "native phosphorylation pattern" means a phosphorylation pattern of casein from animal origin. For example, the casein of non-animal origin completely lacks or is substantially reduced in phosphorylation as compared to animal-derived casein. In a preferred embodiment, the casein of non-animal origin is substantially reduced in phosphorylation as compared to animal-derived casein.

In some embodiments, the casein of non-animal origin has non-native glycosylation pattern. A "native glycosylation pattern" means a glycosylation pattern of casein from animal origin. For example, the casein of non-animal origin completely lacks or is substantially reduced in glycosylation as compared to animal-derived casein. In a preferred embodiment, the casein of non-animal origin is substantially reduced in glycosylation as compared to animal-derived casein.

In a preferred embodiment, the casein of non-animal origin is substantially reduced in phosphorylation and glycosylation as compared to animal-derived casein.

It is known that dairy caseins, notably alpha-S1, alpha-S2 and beta caseins, are phosphorylated; in addition, kappa caseins are glycosylated (Walstra et al. (2006) Dairy Science and Technology. Taylor and Francis Group, Boca Ranton, USA; Martin et al., (2003) Non bovine caseins quantitative variability and molecular diversity. In: Fox PF and Mc Sweeney PLH. Advances in Dairy Chemistry - Proteins, Vol1, Springer, New-York, 227-310). Caseins phosphorylations play an important role in the interactions with calcium and in the structure of dairy casein micelles. Such post-translational modifications (PTMs) will be different in casein of non-animal origin, which are made in microorganisms. For example, in bacteria, PTMs are much less frequent than in eukaryotic cells (Macek et al. (2019) Protein post-translational modifications in bacteria. Nat Rev Microbiol 17, 651-664). In non-animal eukaryotic cells (e.g. protists, fungi, plants), high levels of PTMs may be observed, but with different patterns as compared with mammalian cells.

It is also known that kappa caseins also play an important role in the formation of dairy casein micelles. The fact that improving aerating property of a mixture of ingredients suitable for preparing an aerated frozen product can be achieved in the absence of conventional post-translational modifications and in the absence of kappa caseins is unexpected.

*Mixture of ingredients suitable for preparing an aerated frozen product*

The mixture suitable for preparing an aerated frozen product (hereafter the "mixture") may be any mix that can be aerated and frozen for the preparation of an aerated frozen product as defined herein, such as an ice cream-substitute mix, a frozen yogurt-substitute mix, a fruit juice mix, a sherbet mix, a sorbet mix or a combination thereof with the casein in the sole form of non-animal origin disclosed herein. A mixture may contain fat, carbohydrates, and stabilizers together with water and, if desired, other conventional ingredients as disclosed below, such as mineral salts, colorants, flavorings, inclusions, etc..

In one embodiment, the mixture of step a) is prepared by incorporating casein in the sole form of non-animal origin, for example by incorporating a casein composition comprising casein in the sole form of non-animal origin, into a mix of ingredients suitable for preparing a frozen product, thereby obtaining the mixture of ingredients suitable for preparing an aerated frozen product of step a).

In some embodiments, the mixture comprises ingredients in the sole form of non-animal origin. Therefore, the aerated frozen product obtained from the mixture is an aerated frozen product from non-animal origin.

In some embodiments, the mixture comprises a dairy-substitute product.

In some embodiments, the mixture is a dairy-substitute product comprising casein in the sole form of non-animal. Therefore, the mixture may be prepared by incorporating casein in the sole form of non-animal, for example by incorporating a casein composition comprising casein in the sole form of non-animal origin, into a dairy-substitute product. Assuming that the dairy-substitute product in which casein is incorporated is suitable for preparing a frozen product, such as an ice cream-substitute or a frozen yogurt-substitute.

The dairy-substitute product may be a milk-substitute or a dairy-substitute product made from a milk-substitute. Examples of dairy-substitute products made from milk-substitutes include, but are not limited to, yogurt-substitutes or cream-substitutes. In the context of the invention, the milk-substitute or a dairy-substitute product made from a milk-substitute is suitable for preparing frozen products, for example for preparing ice cream-substitutes, frozen yogurt-substitutes, sorbets, or sherbets.

In some embodiments, the mixture is a milk-substitute comprising casein in the sole form of non-animal. Therefore, the mixture may be prepared by incorporating casein in the sole form of non-animal, for example by incorporating a casein composition comprising casein in the sole form of non-animal origin, into a milk-substitute. Assuming that the milk-substitute in which casein is incorporated is suitable for preparing a frozen product, such as an ice cream-substitute, a frozen yogurt-substitute or a sorbet.

In some embodiments, the mixture is a cream-substitute comprising casein in the sole form of non-animal. Therefore, the mixture may be prepared by incorporating casein in the sole form of non-animal, for example by incorporating a casein composition comprising casein in the sole form of non-animal origin, into a cream-substitute. Assuming that the cream-substitute in which casein is incorporated is suitable for preparing a frozen product, such as an ice cream-substitute.

In some embodiments, the mixture is a yogurt-substitute comprising casein in the sole form of non-animal. Therefore, the mixture may be prepared by incorporating casein in the sole form of non-animal, for example by incorporating a casein composition comprising casein in the sole form of non-animal origin, into a yogurt-substitute. Assuming that the yogurt-substitute in which casein is incorporated is suitable for preparing a frozen product, such as a frozen-substitute yogurt.

In some embodiments, the mixture is a fruit juice mix comprising casein in the sole form of non-animal. Therefore, the mixture may be prepared by incorporating casein in the sole form of non-animal, for example by incorporating a casein composition comprising casein in the sole form of non-animal origin, into a fruit juice mix. Assuming that the fruit juice mix in which casein is incorporated is suitable for preparing a frozen product, such as a sorbet.

In some embodiments, the mixture is a sherbet mix comprising casein in the sole form of non-animal. Therefore, the mixture may be prepared by incorporating casein in the sole form of non-animal, for example by incorporating a casein composition comprising casein in the sole form of non-animal origin, into a sherbet mix. Assuming that the sherbet mix in which casein is incorporated is suitable for preparing a frozen product, such as a sherbet.

In some embodiments, the mixture is a sorbet mix comprising casein in the sole form of non-animal. Therefore, the mixture may be prepared by incorporating casein in the sole form of non-animal, for example by incorporating a casein composition comprising casein in the sole form of non-animal origin, into a sorbet mix. Assuming that the sorbet mix in which casein is incorporated is suitable for preparing a frozen product, such as a sorbet.

In some embodiments, the milk-substitute is a plant milk (i.e. a plant-based milk). A plant milk may be prepared from almond, coconut, cashew, macadamia nut, walnut, hazelnut, pistachio, pecan, soy, oat, rice, hemp, pea, flax, quinoa, sunflower seed, banana, or a combination thereof. Said plant milks are commonly called almond milk, coconut milk, cashew milk, macadamia milk, walnut milk, hazelnut milk, pistachio milk, pecan milk, soy milk, oat milk, rice milk, hemp milk, pea milk, flax milk, quinoa milk, sunflower seed milk, banana milk, or a combination thereof.

Methods for preparing a plant milk are known in the art. In one example, the plant milk is almond milk, which can be made by grinding almonds in a blender with water, then straining out the almond pulp with a strainer or cheesecloth. Almond milk can also be made by adding water to finely ground almonds, almond butter, or cream. In another example, the plant milk is coconut milk, which can be made by grating the white inner flesh of a brown coconut and mixing the shredded coconut meat with a small amount of water in order to suspend the fat present in the grated meat. The grating process can be carried out manually or by comminution, a process used to facilitate the grating.

The plant milk may also be a combination of one, two or more different types of plant-based milks produced from other plants sources mixed together.

The Applicant has surprisingly shown that casein in the sole form of non-animal origin as disclosed herein provides an unexpected overrun to an aerated frozen product prepared from ingredients having low or no volume increase after aerating, such as fruit juice mix, sorbet mix or dairy-substitute products prepared from coconut milk, rice milk, oat milk, or a combination thereof. For example, an aerated frozen product prepared from coconut milk, rice milk, oat milk, or a combination thereof. Coconut milk, rice milk, and oat milk, have intrinsically low or no volume increase after aerating.

In some embodiments, the dairy-substitute product has a volume increase after aerating below 46%, such as below 40%, such as below 35%, such as below 30%, such as below 25%, such as below 20%, such as below 15%, such as below 10%, such as below 9%, such as below 8%, such as below 7%, such as below 6%, such as below 5%, such as below 4%, such as below 3%, such as below 2%, such as below 1%.

In some embodiments, the mixture comprises lipids. Lipids play a role in the organoleptic sensation, for example for ice creams. The lipids that are contained in the mixture may be lipids of non-animal origin, for example lipids extracted from plant. Lipid content may be adjusted, in quantity and quality, for example in order to obtain an aerated frozen product that mimics the sensory characteristics of an aerated frozen product prepared from a dairy product.

In some embodiments, the mixture has a lipid content from 0 % to 30 %, such as from 0.5 % to 30 %, from 0.5 % to 30 %, from 0.5 % to 20 %, from 0.5 % to 15 %, from 0.5 % to 10 %, from 1 % to 30 %, from 1 % to 20 %, from 1 % to 15 %, from 1 % to 10 %. Lipid content in a product corresponds to the mass of lipids in the product divided by the total mass of the product. Lipid content of a food product may be determined by a variety of methods, including, but not limited to, AOAC International reference method AOAC 954.02.

The lipid content of the mixture usually depends on the nature and amount of the ingredients used to prepare it, for example it depends on the nature and amount of the plant milk, and eventually of the plant oil, used to prepare said mixture.

In some embodiments, the mixture comprises plant oil. Plant oil brings lipids to the mixture. Examples of plant oils include, but are not limited to, sunflower oil, coconut oil, mustard oil, peanut oil, canola oil, corn oil, cottonseed oil, flax seed oil, olive oil, palm oil, rapeseed oil, safflower oil, sesame oil, soybean oil, almond oil, beech nut oil, brazil nut oil, cashew oil, hazelnut oil, macadamia nut oil, mongongo nut oil, pecan oil, pine nut oil, pistachio nut oil, walnut oil, avocado oil, grape oil, camelina oil, or a combination thereof.

In some embodiments, the mixture may comprise plant butter, such as cocoa butter.

In some embodiments, the mixture comprises carbohydrates, such as sugars (i.e. monosaccharides and disaccharides). Such carbohydrates play a role in the organoleptic sensation.

However, mixtures with reduced carbohydrate content (low carbohydrate), such as mixtures with reduced sugar content, have been produced during the last decades, in order to address health concerns. In the present invention, the carbohydrates that are contained in the mixture are carbohydrate of non-animal origin, such as carbohydrate extracted from plant. The carbohydrate content can be any carbohydrate content commonly used in mixture of ingredients suitable for preparing an aerated frozen product. For example, carbohydrate content may be adjusted, in quantity and quality, in order to mimic the sensory characteristics of a dairy ice cream or a dairy frozen yogurt.

In some embodiments, the mixture has a carbohydrate content from 0 % to 30 %, such as from 0.1 % to 30 %, from 0.1 % to 20 %, from 0.1 % to 15 %, from 0.1 % to 10 %, from 1 % to 15 %, from 0.1 % to 10 %, from 1 % to 30 %, from 1 % to 20 %, from 1 % to 15 %, from 1 % to 10 %, from 5 % to 30 %, from 5 % to 20 %, from 5 % to 15 %, from 5 % to 10 %, from 10 % to 30 %, from 10 % to 20 %, from 10 % to 15 %. In some other embodiments, the mixture has a carbohydrate content from 0 % to 10 %, such as from 0 % to 9 %, from 0 % to 8 %, from 0 % to 7 %, from 0 % to 6 %, from 0 % to 5 %, from 0 % to 4 %, from 0 % to 3 %, from 0 % to 2 %, from 0% to 1 %. Carbohydrate content in a product corresponds to the mass of carbohydrates in the product divided by the total mass of the product. Carbohydrate content of a product may be determined by a variety of methods, including, but not limited to, high performance liquid chromatography.

In some embodiments, the mixture has a sugar content from 0 % to 20 %, such as from 0.1 % to 20 %, from 0.1 % to 15 %, from 0.1 % to 10 %, from 1 % to 15 %, from 0.1 % to 10 %, from 1 % to 30 %, from 1 % to 20 %, from 1 % to 15 %, from 1 % to 10 %, from 5 % to 30 %, from 5 % to 20 %, from 5 % to 15 %, from 5 % to 10 %, from 10 % to 30 %, from 10 % to 20 %, from 10 % to 15 %. In some other embodiments, the mixture has a sugar content from 0 % to 10 %, such as from 0 % to 9 %, from 0 % to 8 %, from 0 % to 7 %, from 0 % to 6 %, from 0 % to 5 %, from 0 % to 4 %, from 0 % to 3 %, from 0 % to 2 %, from 0% to 1 %. Sugar content in a product corresponds to the mass of sugar in the product divided by the total mass of the product. Sugar content of a product may be determined by a variety of methods, including, but not limited to, high performance liquid chromatography.

For example, a dairy ice cream mix commonly has a carbohydrate content from 14% to 17%. Therefore, a mixture according to the invention may have a carbohydrate content from 14% to 17%.

Suitable carbohydrates can be selected from, without being limited to, one or more of the following: monosaccharides, disaccharides, oligosaccharides, and polysaccharides. Monosaccharides and disaccharides are commonly known as "sugars". The most common oligosaccharide is "starch".

Examples of suitable carbohydrates include, but are not limited to, sucrose, glucose, fructose, mannose, maltose, or combinations thereof. In certain embodiments, examples of suitable carbohydrates may be selected from, without being limited to, one or more of the following: sucrose, glucose, maltose, and fructose. In a preferred embodiment, the mixture comprises carbohydrates of non-animal origin. Carbohydrates of non-animal origin may be glucose, saccharose, maltose, or fructose. Glucose, saccharose, maltose, and fructose can be obtained from plants.

Carbohydrates may be contained in syrup of non-animal origin such as, without being limited to, one or more of the following: corn syrup, maple syrup, golden syrup, agave syrup, honey syrup, chocolate syrup, cane syrup, fruit syrup, rice syrup, barley malt syrup, and date syrup. Therefore, the mixture may comprise one or more of the syrup of non-animal origin disclosed herein.

In a preferred embodiment, the mixture does not comprise lactose.

In some embodiments, the mixture may also contain other ingredients of non-animal origin. For example, the other ingredient of non-animal origin can be any ingredient commonly used in dairy-substitute products or sorbet preparations since it is not an essential parameter of the present invention. Non limiting "other ingredients" include, but are not limited to:

- Emulsifiers (e.g., lecithin, carrageenan, cellulose gum, cellulose gel, starch, gum arabic, xanthan gum, mono- and diglycerides, propylene glycol monoesters, sodium stearoyl-2-lactylate, polysorbate 60, polysorbate 80, lecithin, hydroxylated lecithin, or combinations thereof. Emulsifier content may be between about 0.01 % and about 10%, between about 0.05% and about 5%, or between about 0.5% and about 2% by weight.

- Stabilizing agents (e.g., starches, gums [e.g., xanthan gum, bean gum, gear gum, gum arabic, gum ghatti, gum karaya, gum tragacanth, gellan gum], hydrocolloids [e.g., guar, acacia, locust bean gum, xanthan, gellan, carrageenan, cellulose, carboxymethyl cellulose, microcrystalline cellulose, methylcellulose hydroxypropyl methyl cellulose, hydroxypropyl cellulose, pectin, low methoxyl pectin, gelatin, agar, furcellaran, dextran, or combinations thereof. Stabilizing agent content may be between about 0.1 % and about 5%, between about 0.5% and about 3%, between about 0.7% and about 1 .5% by weight. The stabilizing agent enhance physical properties by imparting viscosity or mouthfeel properties, stabilize and/or suspend insoluble materials and prevent separation or settling of ingredients.

- Antioxidants (e.g., rosemary, spearmint, ascorbic acid, sodium ascorbate, Maillard browning products [melanoidins], BHA, BHT, TBHQ, propyl gal late, tocopherols, vitamin A, vitamin E, carotenoids, flavonoids or combinations thereof. Antioxidant content may be between about 0.01 % and about 10%, between about 0.05% and about 5%, or between about 0.1 % and about 2% by weight.

- Vitamins (e.g., vitamin B 12, vitamin D, vitamin C, vitamin A, vitamin E, vitamin B, vitamin K, thiamine, riboflavin, pyridoxine, carotenoids (e.g., beta-carotene, zeaxanthin, lutein, lycopene), niacin, folic acid, pantothenic acid, biotin, choline, inositol) or combinations thereof.

- Preservatives (e.g., potassium sorbate, sorbic acid or combinations thereof).

- Buffering agents that prevent undesired creaming or precipitation upon addition of the milk-substitute into hot, acidic environments (e.g. when added to a hot beverage such as coffee; e.g., monophosphates, diphosphates, sodium mono- and bicarbonates, potassium mono- and bicarbonates, potassium phosphate, dipotassium phosphate, potassium hydrophosphate, sodium bicarbonate, sodium citrate, sodium phosphate, disodium phosphate, sodium hydrophosphate, sodium tripolyphosphate or combinations thereof).

- Minerals (e.g., chloride, sodium, calcium, iron, chromium, copper, iodine, zinc, magnesium, manganese, molybdenum, phosphorus, potassium, selenium, aluminum, soluble mineral salts, slightly soluble mineral salts, insoluble mineral salts, chelated minerals, mineral complexes, non- reactive minerals such as carbonate minerals, reduced minerals, ammonium or combinations thereof).

- Antimicrobial agents.

- Dietary fibers (e.g., oat fiber, barley fiber, rye fiber, or a combination thereof). Dietary fiber content may be between about 0% and about 40%, between about 1 % and about 20%, or between about 1.5% and about 5% by weight.

- Amino acids (e.g., essential amino acids, such as arginine, cysteine, histidine, isoleucine, leucine, lysine, methionine, phenylalanine, threonine, tryptophan, tyrosine and/or valine, amino acid salts, amino acid chelates or combinations thereof.

- Salts (e.g., sodium citrate, sodium chloride, potassium citrate, potassium phosphate, dipotassium phosphate or combinations thereof. For example, salts are used to enhance flavor.

- pH-adjusting agents (e.g., organic pH adjusting agents, inorganic pH adjusting agents, food grade acids [e.g., acetic, lactic, hydrochloric, phosphoric, citric, tartaric, malic, glucono, deltalactone, gluconic acid], basic pH adjusting agent [e.g., disodium diphosphate, potassium hydroxide] or combinations thereof).

- Binding agents (e.g., carrageenan, cellulose gum, cellulose gel, starch, maltodextrin, gum arabic, xanthan gum or combinations thereof; between about 0.01 % and about 10%, between about 0.05% and about 5%, or between about 0.1 % and about 2% by weight).

- Prebiotics (e.g., fructooligosaccharides, galactooligosaccharides); and

- Biotics (e.g., Bifidobacterium spp., Clostridium spp., Bacteroides spp. Enterococcus faecalis, E. coli, Enterobacter cloacae, Klebsiella pneumoniae, Staphylococcus epidermidis, Staphylococcus haemolyticus, Lactoferrin or combinations thereof).

- Ferments. For example, the first edible composition, such as a dairy-substitute product, may contain bacteria as ferments that can be used for fermentation, such as any lactic acid bacteria from plant sources, e.g. *Lactobacillus plantarum Lactobacillus fermentum* and *Lactobacillus brevis, Lactobacillus bulgaricus, Streptococcus thermophilus, Bifidobacterium, Lactobacillus acidophilus,* or mixture thereof.

- Fruit preparation, such as, for example for smoothies, 50 to 80% by weight of fruit preparation on the weight of the product.

- Flavoring agents (i.e. any agent playing a role in the flavor of the product).

- Sweeteners, such as steviosides.

Artificial sweeteners (i.e. artificial substitutes for sugar), such as acesulfame potassium, aspartame, advantame, cyclamate, neotame, polyols, saccharin, siraitia grosvenorii, and sucralose.

In some embodiments, the mixture does not contain gelatine.

In some embodiment, the mixture does not comprise one or more emulsifier and/or stabilizing agents selected from the group consisting of mono- and diglycerides of fatty acids (E471), locust bean gum/flour (known as E410), sodium alginate (known as E401), guar gum (known as E412) and carrageenan (known as E407). In a preferred embodiment, the mixture does not comprise mono- and diglycerides of fatty acids (E471), locust bean gum/flour (known as E410), sodium alginate (known as E401), guar gum (known as E412) and carrageenan (known as E407).

In some embodiments, the mixture does not comprise emulsifiers or stabilizing agents other than the casein in the sole form of non-animal origin, such as acacia, agar-agar, gum arabic, gum ghatti, gum karaya, gum tragacanth, bean gum, cassava starch, carrageenan, cellulose, cellulose gum, microcrystalline cellulose, methylcellulose hydroxypropyl methyl cellulose, hydroxypropyl cellulose, pectin, low methoxyl pectin, gelatin, agar, furcellaran, dextran, gellan gum, guar gum, lecithin, hydroxylated lecithin, monoglyceride of fatty acids, diglyceride of fatty acids, propylene glycol monoester, polysorbate 60, polysorbate 80, sodium stearoyl-2-lactylate, starch, locust bean gum/flour, sodium alginate and xanthan gum.

Typically, the mixture comprises lipids of non-animal origin, a sweetener (such as one or more sugars), a dairy-substitute product and casein in the sole form of non-animal origin. For example, for a mixture of ingredients suitable for preparing an ice cream-substitute, the dairy-substitute product is typically a milk-substitute. Additionally, coloring and flavoring agents may be added to the mixture. For example, the mixture may comprise (i) from 12% to 17% of lipid, such as from 15% to 16% of lipid, (ii) from 15% to 22% of carbohydrates, such as from 19% to 20% of carbohydrates, and (iii) from 1% to 5% of proteins, such as from 2% to 3% of proteins.

In some embodiments, the mixture comprises from 0.1 % to 10 % of casein of non-animal origin, such as from 0.1 % to 9 %, such as from 0.1 % to 8 %, such as from 0.1 % to 7 %, such as from 0.1 % to 6 %, such as from 0.1 % to 5 %, such as from 0.1 % to 4 %, such as from 0.5 % to 10 %, such as from 0.5 % to 9 %, such as from 0.5 % to 8 %, such as from 0.5 % to 7 %, such as from 0.5 % to 6 %, such as from 0.5 % to 5 %, such as from 1 % to 10 %, such as from 1 % to 9 %, such as from 1 % to 8 %, such as from 1 % to 7 %, such as from 1 % to 6 %, such as from 1 % to 5 %, such as from 1 % to 4 %, such as from 2 % to 10 %, such as from 2 % to 9 %, such as from 2 % to 8 %, such as from 2 % to 7 %, such as from 2 % to 6 %, such as from 2 % to 5 %, such as from 2 % to 4 %, such as from 3 % to 10 %, such as from 3 % to 9 %, such as from 3 % to 8 %, such as from 3 % to 7 %, such as from 3 % to 6 %, such as from 3 % to 5 %, such as from 3 % to 4 % of casein of non-animal origin, such as about 1%, about 2%, about 3%, about 4%, about 5%, about 6%, about 7%, about 8%, about 9%, about 10% of casein of non-animal origin. Casein content in a product corresponds to the mass of casein in the product divided by the total mass of the product.

In some embodiments, the mixture may have a protein content from 0.5 % to 30 %, such as from 0.5 % to 30%, from 0.5 % to 20 %, from 0.5 % to 15%, from 0.5 % to 15 %, from 1 % to 10 %, from 2 % to 10 %, from 2% to 8%, from 1 % to 3%, from 2% to 5%, from 3% to 7%. In some embodiments, the mixture comprises 0.1 %, 0.5%, 1 %, 1.5%, 2%, 3%, 4%, 5%, 6%, 7%, 8%, 9%, 10%, 11%, 12%, 13%, 14% 15%, 16%, 17%, 18%, 19%, 20%, 21%, 22%, 23%, 24%, 25%, 24%, 25%, 26%, 27%, 28%, 29%, 30% of protein. Protein content corresponds to the mass of protein in the product divided by the total mass of product. Protein content of a food product may be determined by a variety of methods, including, but not limited to, AOAC International reference methods AOAC 990.03 and AOAC 992.15, and combustion analysis (ISO 14891 :2008).

In some embodiments, the ratio of protein to lipid in the mixture is about 1:40, about 1:20, about 1:15, about 1:10, about 1:5, about 1:4, about 1:3, about 1:2, about 1:1, about 2:1, about 3:1, about 4:1, about 5:1, about 10:1, about 15:1, about 20:1.

In some embodiments, the mixture has a pH from pH 5.5 to pH 7.5, preferably from 6 to 7, such as pH 6.7. For example, the mixture of ingredients is suitable for preparing an ice cream-substitute and has a pH from pH 5.5 to pH 7.5, preferably from 6 to 7, such as pH 6.7.

In some embodiments, the mixture has a pH from pH 3 to pH 6, such as from 4 to 5. For example, the mixture of ingredients is suitable for preparing a frozen yogurt-substitute and has a pH from pH 3 to pH 6, such as from 4 to 5.

In some embodiments, the mixture has a pH from pH 2 to pH 3. For example, the mixture of ingredients is suitable for preparing a sorbet and has a pH from pH 2 to pH 3.

In some embodiments, the mixture does not contain gelatine.

In some embodiments, the mixture does not contain foaming agents other than the casein in the sole form of non-animal origin.

## Step b)

Step b) consists in forming an aerated frozen product from the mixture of ingredients, wherein the aerated frozen product has an overrun of at least 20%.

Step b) is a common step for the skilled person in the field of the production of aerated frozen products, such as ice creams and sorbets.

Aeration requires mechanical energy to help create the bubbles and/or requires gas (e.g. $N_2O$) under pressure to help create the bubbles.

The aerated frozen product may be formed by aerating the mixture thereby obtaining an aerated mixture and freezing the aerated mixture thereby obtaining an aerated frozen product. Aerating and freezing may be carried out simultaneously or sequentially. Preferably, aerating and freezing are carried out simultaneously, preferably using dedicated equipment, for example using an ice cream maker.

In some embodiments, the aerated frozen product is formed in step b) by simultaneously aerating and freezing the mixture of ingredients at a temperature below 0°C, preferably at a temperature below -4°C, more preferably at a temperature from -4°C to -8°C thereby obtaining an aerated frozen product. Optionally in these embodiments, such as for preparing an ice cream-substitute, the product is further frozen at a temperature equal to or below - 18°C, preferably at a temperature from -25°C to -30°C or at a temperature from -30°C to - 60°C. In some embodiment, the further freezing step may be conducted for at least 4 hours.

In a preferred embodiment, such as for preparing an ice cream-substitute, the aerated frozen product is formed in step b) by:

b1) simultaneously aerating and freezing the mixture of ingredients at a temperature below 0°C, preferably below -4°C, more preferably from -4°C to -8°C. Step b1) usually allows forming a semi-solid aerated frozen product; and

b2) freezing the product obtained in step b1) at a temperature equal to or below -18°C, preferably from -25°C to -30°C or from -30°C to -60°C. Step b2) usually allows hardening and further stabilizing the product. In some embodiment, the step b2) may be conducted for at least 4 hours.

Any ice cream maker commonly used in the industry can be used to aerate and freeze the mixture, e.g. Hoyer Frigus and PMS ice cream freezer. The mixture is normally pumped into the freezer at a temperature of about 0°C to about 8°C, preferably of about 2°C to about 4°C and substantially simultaneously an appropriate amount of air is introduced into the mixture. Depending upon overrun desired in the aerated frozen product, a skilled person can easily determine the amount of air required. The step of freezing under agitation is conducted depending upon the freezing point of the mixture.

Typically, the step is conducted at a temperature of about -4°C to about -8°C, preferably of about -5°C to about -6°C. The time required is dependent on the amount of mixture and air, and the pumping flow rate. A skilled person can easily determine this without undue experimentation.

The aerated frozen product has an overrun of at least 20%, such as from 20% to 200%, such as from 50% to 200%, such as from 20% to 150%, such as from 50% to 150%, such as from 20% to 100%, such as from 20% to 70%, such as from 30% to 100%, such as from 30% to 70%, such as from 50% to 100%, such as from 50% to 70%.

The aerated frozen product of the invention has an improved texture compared to an aerated frozen product prepared from a mixture as disclosed herein without casein of non-animal origin.

## *Aerated frozen product*

In a second object, the present invention relates to an aerated frozen product obtainable by the process according to the invention, said aerated frozen product comprising casein in the sole form of non-animal origin, wherein the aerated frozen product has an overrun of at least about 20%.

According to the invention, the aerated frozen product is an edible aerated frozen product (i.e. an aerated frozen food product for consumption).

The specific embodiments detailed in the section "Method of the invention" above, relating to the ingredients and composition of the mixture of ingredients suitable for preparing an aerated frozen product, apply to the second object of the invention.

## DESCRIPTION OF THE FIGURES

**Figure 1:** shows the volume of a milk-substitute before and after aerating. Initial volume before foaming (left) and volume after aerating (right); the volume of liquid and foam are measured after aerating.

**Figure 2:** shows the ratio foam to liquid of a milk-like before and after aerating at 25°C. Black bars: volume of foam; dotted bars: volume of liquid; 0: no caseins, MP: sodium caseinates from bovine milk, Armor Proteins, PF: sodium caseinates made by precision fermentation, as in Example 1, Pea: Pea proteins. Top: t=0 after aerating; bottom: t=10 min after aerating.

**Figure 3:** shows an example of ice cream-substitute generated as described in Example 3.

## EXAMPLES

### Example 1: Synthesis of recombinant caseins

Synthetic genes coding for alpha-S1 and beta casein (related to natural genes P02662, and P02666, respectively), were modified, in order to remove the signal peptide, and to optimize codon usage for expression in *Escherichia coli,* and the sequence of the proteins encoded by the new synthetic open reading frames (SEQ ID NO: 2 and SEQ ID NO: 4) are shown in Table 2, last column. The two synthetic open reading frames were cloned together into pET25b+, in replacement of the NdeI-HindIII small fragment of this vector, in a same operon under the control of the T7 promoter of pET25b+, with (i) both synthetic open reading frames under the control of a T7 ribosome binding site and (ii) the beta casein open reading frame being proximal to the promoter and the alpha-S1 open reading frame distal to the promoter. The resulting plasmid, capable of co-expressing the two proteins, was transformed into BL21(DE3) strains (Novagene). Individual transformed clones were isolated, and checked for each synthetic gene, one clone was used to inoculate LB medium.

**Table 2:** Sequences of natural casein (precursors) and of the related recombinant proteins. In natural casein, signal peptide is indicated in bold. In recombinant casein, the methionine coded by the start codon of the new open reading frame is indicated in bold.

| Name and Uniprot reference of protein precursor | sequence of casein precursor | sequence of recombinant casein |
|---|---|---|
| Alpha-S1 casein P02662 | **MKLLILTCLVAVALA**RPKHPIKHQGLP QEVLNENLLRFFVAPFPEVFGKEKVNELS KDIGSESTEDQAMEDIKQMEAESISSSE EIVPNSVEQKHIQKEDVPSERYLGYLEQ LLRLKKYKVPQLEIVPNSAEERLHSMKE GIHAQQKEPMIGVNQELAYFYPELFRQF YQLDAYPSGAWYYVPLGTQYTDAPSFS DIPNPIGSENSEKTTMPLW (SEQ ID NO: 1) | **M**RPKHPIKHQGLPQEVLNENLLRFFVAP FPEVFGKEKVNELSKDIGSESTEDQAME DIKQMEAESISSSEEIVPNSVEQKHIQKE DVPSERYLGYLEQLLRLKKYKVPQLEIVP NSAEERLHSMKEGIHAQQKEPMIGVNQ ELAYFYPELFRQFYQLDAYPSGAWYYVP LGTQYTDAPSFSDIPNPIGSENSEKTTM PLW (SEQ ID NO: 2) |
| Beta casein P02666 | **MKVLILACLVALALA**RELEELNVPGEI VESLSSSEESITRINKKIEKFQSEEQQQT EDELQDKIHPFAQTQSLVYPFPGPIPNSL PQNIPPLTQTPVVVPPFLQPEVMGVSKV KEAMAPKHKEMPFPKYPVEPFTESQSLT LTDVENLHLPLPLLQSWMHQPHQPLPPT VMFPPQSVLSLSQSKVLPVPQKAVPYPQ RDMPIQAFLLYQEPVLGPVRGPFPIIV (SEQ ID NO: 3) | **M**RELEELNVPGEIVESLSSSEESITRINK KIEKFQSEEQQQTEDELQDKIHPFAQTQ SLVYPFPGPIPNSLPQNIPPLTQTPVVVP PFLQPEVMGVSKVKEAMAPKHKEMPFP KYPVEPFTESQSLTLTDVENLHLPLPLLQ SWMHQPHQPLPPTVMFPPQSVLSLSQS KVLPVPQKAVPYPQRDMPIQAFLLYQEP VLGPVRGPFPIIV (SEQ ID NO: 4) |

***Cell cultivation***

In order to produce a batch of alpha-S1 and beta caseins, the resulting strain was cultivated as follow.

Concentrated stocks of the strain of each 1 mL, stored in LB with 10 % DMSO at - 80°C, were each used to inoculate 1 L of preculture, in a revivification rich medium Y15 supplemented with 100 μg/mL of ampicillin. The precultures were grown in 4 L or 5 L erlenmeyers to reach optical densities (600 nm) in the range of 2.5-3.

These first precultures was used to inoculate a second preculture (2 to 6 % v/v inoculation rate), in an optimized synthetic culture medium supplemented with 100 μg/mL of ampicillin and 15 g/L of glucose. The culture was stirred in a bioreactor at 37°C. Stirring, aeration and pressure were adjusted to maintain dissolved oxygen at 15% of saturation. pH was regulated to 7.2, with the automatic addition of a solution of ammonia (20.5 % *v/v*) and a solution of phosphoric acid (5 mol/L). After 10 hours, an optical density in the range of 15 was obtained.

This second preculture was used to inoculate a culture in another fermenter (capacity from 350 L to 3500 L). Inoculation rate was 6 % v/v, with an initial volume culture of 70-77% of fermenter's capacity, in an optimized synthetic culture medium supplemented with 100 μg/mL of ampicillin and 1 g/L of glucose.

The culture was stirred at 37°C. Temperature could be lowered by up to 2 °C during the run to optimize production. After 30 minutes, glucose was added regularly in the bioreactor, using a concentrated 400 g/L glucose solution, and the feed was adjusted to sustain growth and production, without glucose accumulation in the medium. Ampicillin was added in the bioreactor each 9 hours, to maintain a concentration of 100 μg/mL, and antifoam (5% stock solution, Struktol J673A) was added when necessary. Stirring, aeration and pressure were adjusted to maintain dissolved oxygen at 15% of saturation. pH was regulated to 7.2, with the automatic addition of a solution of ammonia (20.5 % *v/v*) and a solution of phosphoric acid (5 mol/L). IPTG was added at a final concentration of 0.2 mM when optical density reached 40±5, and the culture was stopped after about 24 hours, when optical densities (600 nm) in the range of 80 can be achieved.

*Downstream processing*

In order to obtain a batch of purified alpha-S1 and beta caseins, a bacterial culture obtained as described above was processed as follow.

The culture medium was concentrated by centrifugation (centrifugal force: 17000 G, temperature < 20°C) using a disc-stack centrifuge adapted to the large volume. The concentrated biomass was mixed with water, until obtaining a homogeneous suspension and the suspension was separated by a new centrifugation. This washing procedure was then repeated twice, to finally obtain a pellet of concentrated washed cells.

Washed concentrated bacteria were then resuspended in osmosis water, until having a homogeneous suspension, and the pH was adjusted to 8.5 with NaOH 30% *w/v.* The resulting suspension was heated during 1 hour at 95°C, allowing efficient bacterial lysis and thus, *E.coli* strain deactivation, *E.coli* proteins precipitation and caseins solubilization. After 1 hour, the pH of the suspension was re-adjusted to 8.5 with NaOH 30% *w/v.* After cooling, a dense suspension was obtained.

The suspension was then separated by centrifugation (centrifugal force: 17000 G, temperature < 20°C) using a disk-stack centrifuge for large volumes, with the aim of eliminating the insoluble particles (cellular debris, *E.coli* precipitated proteins), and recovering purified caseins in the soluble fraction. After separation, the supernatant containing caseins and a heavy phase were obtained. The supernatant was collected. The heavy phase was washed with osmosis water, centrifugated in the same conditions as above, and the supernatant was collected. Both supernatants were then filtered on a 0.8 $\mu$m ceramic mineral membrane (Pall).

The pH of the permeate was then adjusted to 4.6 with a 20% *v/v* solution of lactic acid, at room temperature, in order to precipitate the caseins. The resulting suspension was concentrated by centrifugation (centrifugal force: 17000 G, temperature < 20°C), using a disk-stack centrifuge for large volumes. After separation, concentrated acidic caseins were collected, while the light phase was discarded. Acidic caseins were then washed with osmosis water until obtaining a homogeneous suspension, which was then concentrated by a new centrifugation. The pH of the suspension before separation was measured and adjusted to 4.6 with lactic acid if it was necessary, to avoid caseins loss in the washing water.

*Acid casein production*

Concentrated acidic washed caseins were obtained after separation, and washing water was eliminated. This washing procedure was repeated twice, according to a similar procedure, to finally obtain a pellet of concentrated white and odorless washed acidic caseins.

*Calcium caseinate production*

A suspension of calcium hydroxide (1 mol.L$^{-1}$) was added slowly to a suspension of acidic caseins to adjust the pH to 7, at room temperature, in order to obtain a suspension of calcium caseinates.

*Sodium caseinate production*

A solution of sodium hydroxide (1 mol.L$^{-1}$) was added slowly to a suspension of acidic caseins to adjust the pH to 7, at room temperature, in order to obtain a suspension of sodium caseinates.

Suspensions of acidic caseins, calcium caseinates or sodium caseinates were dried using spray-dryer, to obtain a powder, with a dry matter from 94% to 97%.

***Analysis of recombinant caseinate samples***

Caseins content could be estimated by the analysis of SDS PAGE gels, and the comparison of samples with protein standards (Purified alpha and beta caseins from milk (Sigma)). A sodium and a calcium caseinate powder sample were analyzed. They contained about 80% of recombinant casein (and about 90% of total proteins), with $\alpha_{s1}$ casein representing about 50% (48% to 52%, depending on experiment) of total caseins ($\alpha_{s1}$ casein and $\beta$ casein), similar to the initial composition in the cell before treatment, showing that in the condition we used, there was no bias regarding the $\alpha_{s1}$ casein vs. $\beta$ casein ratio during the purification process.

Further analysis was conducted for other compounds by various methods. Analysis of a calcium caseinate sample is described in Table 3.

**Table 3:** Composition of a calcium caseinate sample. Only detected compounds accounting for more than 0.1 % are accounted for.

|  | % (w/w) |
|---|---|
| Fat | 4.26 |
| including saturated fat | 1.35 |
| Carbohydrates | ND |
| Proteins (total) | 87.38 |
| Calcium | 1.07 |
| Sodium Chloride | 0.59 |
| Polyphenols | 0.96 |
| Water | 4.57 |

**Example 2: Foaming effect of a casein composition produced by precision fermentation in milk-substitutes (spray-dried; casein purity: 80% w/w)**

We tested the impact of the caseinates from precision fermentation on the foaming of plant-based milk-substitutes based on almond, cashew, hazelnut, soy, coconut, rice and oat were test. Products from different brands were tested for some of them.

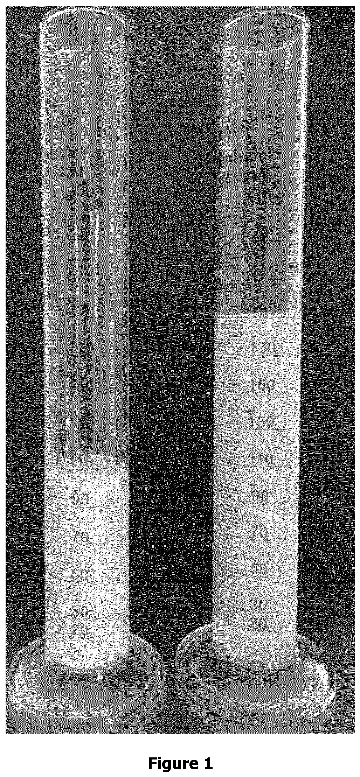

3% of sodium caseinates from precision fermentation (w/w), made as described in example 1 (spray dry, 80% caseins) were mixed with each type of plant-based milk substitute, whose composition is described in Table 4. Some of these products contain additives such as emulsifiers or stabilizers, which may have an impact on foaming properties. In the mixture, the casein content is 2.4% (w/w). The mixture was stirred for 15 minutes at 750 rpm at room temperature. 98 mL of each solution were passed on a milk frother (Burnnove) at 25°C. The foam height was measured before and after aerating on a graduated cylinder (Figure 1). The same measure was taken after 10 minutes at room temperature to analyze foam stability.

In order to compare the foaming effect with other protein sources, the same procedure was realized with sodium caseinates from bovine milk (Armor Protéines, France), with pea protein (Nutralys S85F 2.0, Roquette, France, (84% proteins, dry weight)) and without added proteins.

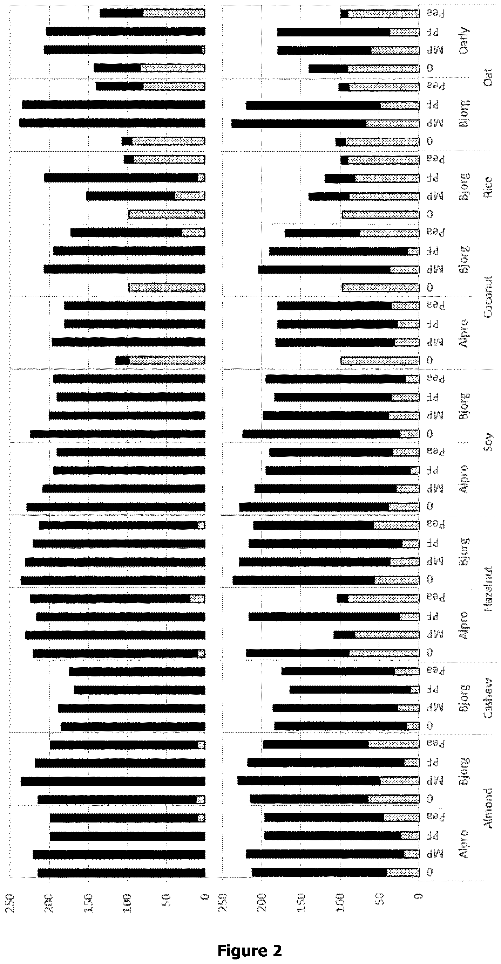

Results are summarized on Figure 2 and in Table 5.

Milk-substitutes from nuts (almond, cashew, hazelnut) and soy were foaming naturally, and no significant difference was observed with the addition of natural or recombinant caseins. In contrast, coconut-based milk-substitute as well as milk-substitutes from rice or oat were not naturally foaming, or barely foaming; but foaming could be observed in the presence of natural or recombinant caseins. In such cases, the foaming impact of caseins was far superior to the foaming impact of pea proteins, which brought only slight foaming effect in rice- and oat-based products, and lower or similar effect in coconut-based products.

Foaming stability, as measured by the decrease after 10 minutes, was in general positively related to the foaming formation efficacy. However, these two parameters were not always correlated: Strong instability (V foam 10min <20%) was observed with milk and pea proteins in Alpro's Hazelnut-based product, and with precision fermentation proteins in Bjorg's Rice-based and in Alpro's Oat-based products, all these combinations having yet at least 90% of volume increase after aerating. In opposite, good stability (V foam 10min >65%) was observed with Pea protein in Bjorg's Rice-based product, and in the absence of added proteins in Bjorg's Oat-based product, whereas these two combinations had low volume increase after aerating (6% and 8%, respectively).

**Table 4:** Composition of tested plant-based milks

| Base | Brand | Composition |
|---|---|---|
| Almond | Alpro | Water, almond (2.3%), tricalcium phosphate, table sea salt, stabilizers (locust bean seed flour, gellan gum), emulsifier (lecithins (sunflower)), vitamins (B2, B12, E, D2). |
| Almond | Bjorg | Almond milk (water, almonds 2.8%), unrefined cane sugar, rice starch, sea salt |
| Cashew | Bjorg | Water, cashews 4%, rice starch, sea salt, stabilizers: guar gum, xanthan gum |

(continued)

| Base | Brand | Composition |
|---|---|---|
| Hazelnut | Alpro | Water, sugar, hazelnut (2.5%,) tricalcium phosphate, table sea salt, stabilizers (locust bean seed flour, gellan gum), emulsifier (lecithins (sunflower)), vitamins (riboflavin (B2), B12, E, D2) |
| Hazelnut | Bjorg | Water, hazelnuts 6.5%, cane sugar, corn maltodextrin, sea salt, thickener: guar gum, xanthan gum |
| Soy | Alpro | Soy base (water, shelled non-GMO soybeans (8%)), sugar, acidity regulators (potassium phosphates), calcium carbonate, flavouring, table salt, stabiliser (gellan gum), vitamins (B2, B12, D2) |
| Soy | Bjorg | Tonyu (water, soybeans 8%) |
| Coconut | Alpro | Water, coconut milk (5.3%) (coconut cream, water), rice (3.3%), tricalcium phosphate, stabilizers (guar gum, gellan gum, xanthan gum), sea salt, vitamins (B12, D2), flavourings |
| Coconut | Bjorg | Water, coconut 5.4%, unrefined cane sugar, stabilizers: guar gum, xanthan gum; Natural coconut flavour, sea salt |
| Rice | Bjorg | Water, rice (12%), sunflower oil, sea salt |
| Oat | Bjorg | Water, oats 11%, cold-pressed sunflower oil, sea salt |
| Oat | Oatly | Water, oats 10%, rapeseed oil, calcium carbonate, calcium phosphates, salt, vitamins (D2, riboflavin, B12), potassium iodide |

**Table 5:** V liquid: volume of liquid, after aerating of 98mL (V initial=Vi) of the product; V foam: volume of foam immediately after aerating of 98mL of the product. The volume increase after aerating is calculated according to the formula: Volume increase after aerating (%) = (V foam + V liquid -Vi)/Vi × 100. Volume of foam is also measured 10 minutes after aerating (V foam 10 min), and expressed here as a percentage of V foam. Measurements are made for aerating at 25°C. 0: no caseins, MP: sodium caseinate from bovine milk, Armor Proteins, PF: sodium caseinate made by precision fermentation, as in Example 1, Pea: Pea proteins.

| Milk subsitute | Brand | Protein type | Vf liquid (ml) 25°C | Vf foam (ml) 25°C | Volume increase 25°C | Vfoam 10min 25°C |
|---|---|---|---|---|---|---|
| Almond | Alpro | 0 | 2 | 212 | 118% | 80% |
| Almond | Alpro | MP | 0 | 220 | 124% | 91% |
| Almond | Alpro | PF | 0 | 198 | 102% | 87% |
| Almond | Alpro | Pea | 10 | 188 | 102% | 80% |
| Almond | Bjorg | 0 | 12 | 202 | 118% | 73% |
| Almond | Bjorg | MP | 0 | 236 | 141% | 76% |
| Almond | Bjorg | PF | 0 | 218 | 122% | 91% |
| Almond | Bjorg | Pea | 10 | 188 | 102% | 70% |
| Cashew | Bjorg | 0 | 0 | 184 | 88% | 91% |
| Cashew | Bjorg | MP | 0 | 188 | 92% | 84% |
| Cashew | Bjorg | PF | 0 | 168 | 71% | 90% |
| Cashew | Bjorg | Pea | 0 | 174 | 78% | 82% |
| Hazelnut | Alpro | 0 | 10 | 210 | 124% | 62% |
| Hazelnut | Alpro | MP | 0 | 230 | 135% | 11% |
| Hazelnut | Alpro | PF | 0 | 216 | 120% | 88% |
| Hazelnut | Alpro | Pea | 20 | 204 | 129% | 6% |
| Hazelnut | Bjorg | 0 | 0 | 236 | 141% | 75% |

(continued)

| Milk subsitute | Brand | Protein type | Vf liquid (ml) 25°C | Vf foam (ml) 25°C | Volume increase 25°C | Vfoam 10min 25°C |
|---|---|---|---|---|---|---|
| Hazelnut | Bjorg | MP | 0 | 230 | 135% | 83% |
| Hazelnut | Bjorg | PF | 0 | 220 | 124% | 88% |
| Hazelnut | Bjorg | Pea | 10 | 202 | 116% | 75% |
| Soy | Alpro | 0 | 2 | 226 | 133% | 83% |
| Soy | Alpro | MP | 0 | 208 | 112% | 86% |
| Soy | Alpro | PF | 0 | 194 | 98% | 94% |
| Soy | Alpro | Pea | 0 | 190 | 94% | 82% |
| Soy | Bjorg | 0 | 0 | 224 | 129% | 88% |
| Soy | Bjorg | MP | 0 | 200 | 104% | 79% |
| Soy | Bjorg | PF | 0 | 190 | 94% | 78% |
| Soy | Bjorg | Pea | 0 | 194 | 98% | 91% |
| Coconut | Alpro | 0 | 96 | 16 | 16% | 0% |
| Coconut | Alpro | MP | 0 | 196 | 100% | 77% |
| Coconut | Alpro | PF | 0 | 180 | 84% | 84% |
| Coconut | Alpro | Pea | 0 | 180 | 84% | 80% |
| Coconut | Bjorg | 0 | 98 | 0 | 0% | NA |
| Coconut | Bjorg | MP | 0 | 206 | 110% | 81% |
| Coconut | Bjorg | PF | 0 | 194 | 98% | 90% |
| Coconut | Bjorg | Pea | 30 | 142 | 76% | 66% |
| Rice | Bjorg | 0 | 98 | $\alpha$ | 0% | NA |
| Rice | Bjorg | MP | 40 | 112 | 55% | 45% |
| Rice | Bjorg | PF | 10 | 196 | 110% | 19% |
| Rice | Bjorg | Pea | 92 | 12 | 6% | 67% |
| Oat | Bjorg | 0 | 94 | 12 | 8% | 100% |
| Oat | Bjorg | MP | $\beta$ | 238 | 143% | 71% |
| Oat | Bjorg | PF | 0 | 234 | 139% | 73% |
| Oat | Bjorg | Pea | 80 | 60 | 43% | 20% |
| Oat | Oatly | 0 | 84 | 58 | 45% | 83% |
| Oat | Oatly | MP | 4 | 202 | 110% | 58% |
| Oat | Oatly | PF | 0 | 204 | 108% | 70% |
| Oat | Oatly | Pea | 80 | 54 | 37% | 15% |

## Example 3: Making of an animal-free ice cream substitute, with caseins made by precision fermentation

3.75g of Sodium Caseinate made from precision fermentation as described in Example 1 were mixed with 170 ml of water on a multifunction robot Mambo 8590 (Cecotec) for 20 minutes at 50°C, speed 3. Calcium caseinate composition is indicated in Table 3, and sodium caseinate composition is considered to be the same, but for salts, since sodium hydroxide instead of calcium hydroxide, was used to adjust pH to 7.

9g of sunflower oil (Carrefour, France) and 19g of deodorized coconut oil (JardinBio-Etic, Lea Nature, France) were heated 30s on the microwave until melting and then the oil mix was slowly added to the casein solution on the robot (1min, speed 4, 70°C).

Powders mix was prepared with 26.6g table sugar (Simple, France), 13.4 glucose syrup (Aube Gourmet, France), 5 g tapioca starch (Ma vie sans gluten, France), 1.13g Cremodan SE 30 (Danisco, France), an ice cream stabilizer, and 0.08g salt (La Baleine, France). The mix was added to the robot and mixed (10min, speed 4, 70°C + 2min30seg, speed 3, 85°C).

The composition of Cremodan SE30 is: Mono- and diglycerides of fatty acids (E471), locust bean gum/flour (known as E410), sodium alginate (known as E401), guar gum (known as E412) and carrageenan (known as E407).

The preparation (248 g) was cooled down to 22°C while stirring and incubated at 4°C for 16 hours. It was then processed in an ice cream maker (Beper, Italy) for 20 minutes, and incubated at -20°C for at least 4 hours.

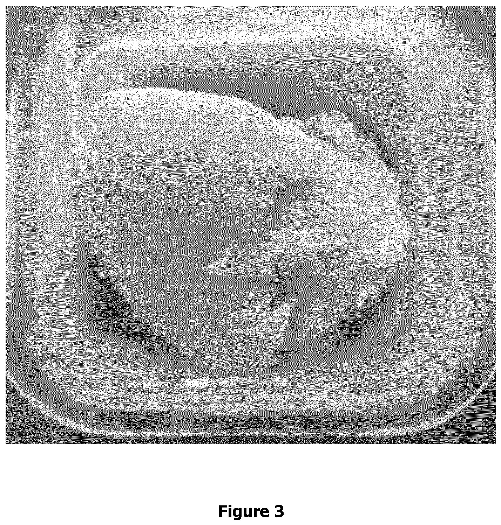

The product is featured on Figure 3. It contained 1.21% caseins from precision fermentation. Estimated composition is indicated in Table 6. The aspect and texture were those expected from a vanilla ice cream.

**Table 6. Estimated composition of ice cream substitute as described in example 3**

|  | % (w/w) |
|---|---|
| Fat | 11.4 |
| including saturated fat | 7.0 |
| Carbohydrates | 17.9 |
| including Sugars | 16.1 |
| Proteins | 1.6 |
| including Caseins | 1.2 |
| Others | 0.8 |
| Water | 68.3 |
| Dry matters | 31.7 |
| total | 100.0 |

When the experiment was conducted in the absence of caseins (replaced with the same mass of water), the resulting ice cream substitute was much less creamy, and crispier.

**Example 4: overrun measurement**

In order to have a quantitative measurement of the impact of the caseins on the texture of an ice cream-substitute, the same experiment protocol as in example 3 was conducted with sodium caseinates made by precision fermentation as in example 1, with sodium caseinates from bovine milk (Armor Protéines, France), and without caseinates (replaced with the same weight of water). It was also repeated in the absence of Cremodan SE 30 (see above). Cremodan SE 30 is an ice cream stabilizer, mixture of hydrocolloid and emulsifiers that also has emulsifying properties.

The overrun was calculated using the following formula:

$$\% \text{ overrun} = (\text{weight } W \text{ of a volume } V \text{ of the mixture} - \text{weight } W \text{ of the same volume } V \text{ of the ice cream-substitute}) / \text{weight } W \text{ of the same volume } V \text{ of the ice cream--substitute}) \times 100$$

The mixture means the preparation before the aerating step.

Results are summarized in Table 7. Overrun was found to be higher with caseinates as compared with the same composition without caseins. In the absence of Cremodan SE 30, the foaming effect of caseins was much more obvious, reaching up to 63% with recombinant caseins.

**Table 7: Measurements were done twice for each experiment. Duplicates were labelled as (1) and (2)**

| Caseins | Cremodan SE 30 | Weight of sample of mix (g) | Weight of same volume of ice cream (g) | Overrun (%) |
|---|---|---|---|---|
| No caseins (1) | + | 80.27 | 62.26 | 28.9% |

(continued)

| Caseins | Cremodan SE 30 | Weight of sample of mix (g) | Weight of same volume of ice cream (g) | Overrun (%) |
|---|---|---|---|---|
| No caseins (2) | + | 80.23 | 61.68 | 30.1% |
| Caseinates Armor Protéines (1) | + | 80.4 | 59.49 | 35.1% |
| Caseinates Armor Protéines (2) | + | 79.86 | 59.96 | 33.2% |
| Caseinates from precision fermentation (1) | + | 80.02 | 57.723 | 38.6% |
| Caseinates from precision fermentation (2) | + | 79.75 | 57.78 | 38.0% |
| No caseins (1) | - | 80.78 | 65.05 | 24.2% |
| No caseins (2) | - | 82.18 | 65.77 | 25.0% |
| Caseinates Armor Protéines (1) | - | 80.52 | 44.05 | 82.8% |
| Caseinates Armor Protéines (2) | - | 82.16 | 45.22 | 81.7% |
| Caseinates from precision fermentation (1) | - | 80.12 | 49.88 | 60.6% |
| Caseinates from precision fermentation (2) | - | 78.00 | 48.87 | 59.6% |

**Claims**

1. A method for preparing an aerated frozen product comprising the steps of:

   a) providing a mixture of ingredients suitable for preparing an aerated frozen product, wherein said mixture comprises casein in the sole form of non-animal origin;
   b) forming an aerated frozen product from the mixture of ingredients ;

   wherein the aerated frozen product has an overrun of at least 20%.

2. The method according to claim 1, wherein the aerated frozen product is formed in step b) by simultaneously aerating and freezing the mixture of ingredients at a temperature below 0°C.

3. The method according to claim 1, wherein the aerated frozen product is formed in step b) by:

   b1) simultaneously aerating and freezing the mixture of ingredients at a temperature below 0°C; and
   b2) freezing the product obtained in step b1) at a temperature equal to or below - 18°C.

4. The method according to any of the preceding claims, wherein the mixture comprises ingredients in the sole form of non-animal origin.

5. The method according to any of the preceding claims, wherein the mixture comprises a dairy-substitute product, such as a dairy-substitute product selected from the group consisting of a milk-substitute, a yogurt-substitute, a cream-substitute, or a combination thereof.

6. The method according to any of the preceding claims, wherein the mixture is prepared by incorporating casein in the sole form of non-animal origin into a dairy-substitute product.

7. The method according to any of the preceding claims, wherein the aerated frozen product is selected from the group consisting of an ice cream-substitute, a sorbet, a frozen yogurt-substitute.

8. The method according to any of the preceding claims, wherein the mixture comprises from 0.1 % to 10 % of casein of non-animal origin.

9. The method according to any of the preceding claims, wherein the casein of non-animal origin is one, two or three casein selected from the group consisting of alpha-S1 casein, alpha-S2 casein, beta casein and kappa casein.

10. The method according to any of the preceding claims, wherein the casein of non-animal origin is alpha-S1 casein, beta casein, a mixture of alpha-S1 casein and beta casein, a mixture of alpha-S1 casein and alpha-S2 casein, or a mixture of beta casein, alpha-S1 casein and alpha-S2 casein.

11. The method according to any of the preceding claims, wherein the mixture does not comprise at least one casein protein selected from the group consisting of alpha-S1 casein, alpha-S2 casein, beta casein and kappa casein.

12. The method according to any of the preceding claims, wherein the mixture does not comprise kappa casein.

13. The method according to any of the preceding claims, wherein :

   (i) at least 50% of the casein of the mixture is caseinate, such as 1, 2, 3 or 4 caseinate(s) selected from the group consisting of sodium caseinate, calcium caseinate, potassium caseinate, and magnesium caseinate; and/or
   (ii) at least 50% of the casein of the mixture is acid casein.

14. The method according to any of the preceding claims, wherein :

   (i) the mixture has a protein content from 0.5 % to 30 %; and/or
   (ii) the mixture has a lipid content from 0 % to 30 %.

15. The method according to any of the preceding claims, wherein the mixture does not comprise mono- and diglycerides of fatty acids (E471), locust bean gum/flour (known as E410), sodium alginate (known as E401), guar gum (known as E412) and carrageenan (known as E407).

16. An aerated frozen product obtainable by the process according to any of the preceding claims, said aerated frozen product comprising casein in the sole form of non-animal origin, wherein the aerated frozen product has an overrun of at least 20%.

**Figure 1**

**Figure 2**

**Figure 3**

# EUROPEAN SEARCH REPORT

**Application Number**

EP 23 30 7243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Catherine Lamb: "Perfect Day Launches Ice Cream Made from Cow-Free Milk, and We Tried It ¦ The Spoon", , 11 July 2019 (2019-07-11), XP093163190, Retrieved from the Internet: URL:https://web.archive.org/web/2019071123 3041/https://thespoon.tech/perfect-day-lau nches-ice-cream-made-from-cow-free-milk-an d-we-tried-it/ [retrieved on 2024-05-15] * the whole document * | 1,4-7,16 | INV. A23G9/32 A23G9/38 A23G9/40 A23G9/42 |
| X | WO 2023/023195 A1 (NEW CULTURE INC [US]) 23 February 2023 (2023-02-23) * paragraph [00160]; claims * | 1-4,6-16 | |
| X | WO 2022/038601 A1 (RE MILK LTD [IL]) 24 February 2022 (2022-02-24) * page 30, lines 23-26 * | 1,4,6,7, 9-11,13, 16 | |
| | | | TECHNICAL FIELDS SEARCHED (IPC) |
| X | WO 2022/098853 A1 (NEW CULTURE INC [US]) 12 May 2022 (2022-05-12) * paragraphs [0006], [0013], [0028], [0029], [0034], [00162]; claims * | 1,4,6,7, 9-11,13, 16 | A23G |
| A | WO 2010/066542 A1 (UNILEVER PLC [GB]; UNILEVER NV [NL] ET AL.) 17 June 2010 (2010-06-17) * page 7, lines 18-19, 29-32; claims * | 1-15 | |

The present search report has been drawn up for all claims

| Place of search | Date of completion of the search | Examiner |
|---|---|---|
| The Hague | 16 May 2024 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7243

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | | Publication date | Patent family member(s) | | Publication date |
|---|---|---|---|---|---|
| WO 2023023195 | A1 | 23-02-2023 | AU | 2022328794 A1 | 15-02-2024 |
| | | | CA | 3228478 A1 | 23-02-2023 |
| | | | IL | 310709 A | 01-04-2024 |
| | | | KR | 20240046904 A | 11-04-2024 |
| | | | US | 2023074278 A1 | 09-03-2023 |
| | | | US | 2024114916 A1 | 11-04-2024 |
| | | | WO | 2023023195 A1 | 23-02-2023 |
| WO 2022038601 | A1 | 24-02-2022 | CA | 3191910 A1 | 24-02-2022 |
| | | | CN | 116367728 A | 30-06-2023 |
| | | | EP | 4199733 A1 | 28-06-2023 |
| | | | IL | 276823 A | 01-03-2022 |
| | | | IL | 300606 A | 01-04-2023 |
| | | | US | 2023292789 A1 | 21-09-2023 |
| | | | WO | 2022038601 A1 | 24-02-2022 |
| WO 2022098853 | A1 | 12-05-2022 | CA | 3197121 A1 | 12-05-2022 |
| | | | EP | 4240859 A1 | 13-09-2023 |
| | | | US | 2024065282 A1 | 29-02-2024 |
| | | | WO | 2022098853 A1 | 12-05-2022 |
| WO 2010066542 | A1 | 17-06-2010 | EA | 201170787 A1 | 30-12-2011 |
| | | | EP | 2364097 A1 | 14-09-2011 |
| | | | ES | 2400631 T3 | 11-04-2013 |
| | | | US | 2010143566 A1 | 10-06-2010 |
| | | | WO | 2010066542 A1 | 17-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 0104847 A1
- WO 03003847 A
- WO 1991008675 A
- WO 2016029193 A
- WO 2018039632 A
- WO 2020219596 A
- WO 2020223700 A
- WO 2022098835 A
- WO 2022098853 A
- WO 2022038601 A
- WO 2022239000 A
- WO 2023133417 A
- WO 2022058573 A
- WO 2022253816 A
- US 6232094 B
- WO 2013148328 A
- US 20100223682 A
- US 5942274 A
- US 20100119691 A
- FR 13

### Non-patent literature cited in the description

- **ROTZ**. Modeling greenhouse gas emissions from dairy farms. *J Dairy Science*, 2017, vol. 101, 6675-6690
- **RAMANKUTTY, N.** ; **A. T. EVAN** ; **C. MONFREDA** ; **J. A. FOLEY**. Farming the planet: 1. Geographic distribution of global agricultural lands in the year 2000. *Global Biogeochem. Cycles*, 2008, vol. 22, GB1003
- **SULTANA et al.** Comparison of water use in global milk production for different typical farms. *Agricultural Systems*, 2014, vol. 129, 9-21
- **ERCIN** ; **ALDAYA**. The water footprint of soy milk and soy burger and equivalent animal products. *Ecological Indicators*, 2012, vol. 18, 392-402
- **SCHLINK et al.** Water requirements for livestock production: a global perspective. *rev. Sci. tech.*, 2010, vol. 29, 603-619
- **MOUSAN** ; **KAMAT**. Cow's Milk Protein Allergy. *Clin Pediatr (Phila)*, 2016, vol. 55 (11), 1054-63
- **MANUYAKORN** ; **TANPOWPONG**. Cow milk protein allergy and other common food allergies and intolerances. *Paediatr Int Child Health*, 2018, vol. 39 (1), 32-40
- **MICHA** ; **MOZAFFARIAN**. Saturated fat and cardiometabolic risk factors, coronary heart disease, stroke, and diabetes: A fresh look at the evidence. *Lipids*, 2010, vol. 45, 893-905
- **JAKOBSEN et al.** Major types of dietary fat and risk of coronary heart disease: A pooled analysis of 11 cohort studies. *Am. J. Clin. Nutr*, 2009, vol. 89, 1425-1432
- **NETTLETON et al.** Saturated fat consumption and risk of coronary heart disease and ischemic stroke: A science update. *Ann Nutr Metab*, 2017, vol. 70, 26-33
- **UGIDOS-RODRÍGUEZ et al.** Lactose malabsorption and intolerance: a review. *Food Funct*, 2018, vol. 9 (8), 4056-4068
- **POST et al.** Effect of temperature and pH on the solubility of caseins: Environmental influences on the dissociation of caseins. *J. Dairy Sci.*, 2012, vol. 95, 1603-1616
- **DE KRUIF**. Supra-aggregates of casein micelles as a prelude to coagulation. *J Dairy Sci*, 1998, vol. 81, 3019-3028
- **DE KRUIF et al.** Casein micelles and their internal structure. *Advances in Colloid and Interface Science*, 2012, vol. 171 (172), 36-52
- **GILLIS JC** ; **AYERBE A**. Le fromage. Lavoisier - Technique Et Documentation, 20 April 2018
- Methods of Manufacture. **SARODE et al.** The Encyclopedia of Food and Health. Academic Press, 2016, vol. 1, 676-682
- **MURPHY** ; **FOX**. Fractionation of sodium caseinate by ultrafiltration. *Food Chem*, 1991, vol. 39, 27-38
- **WARD** ; **BASTIAN**. A method for isolating β-casein. *J. Dairy Sci.*, 1996, vol. 79, 1332-1339
- **HUPPERTZ et al.** *A method for the large-scale isolation of β-casein. Food Chem*, 2006, vol. 99, 45-50
- **LAMOTHE et al.** Short communication: Extraction of β-casein from goat milk. *J. Dairy Sci.*, 2007, vol. 90, 5380-5382
- **O'MAHONY et al.** *Purification of β-casein from milk*, 2007
- **LAW** ; **LEAVER**. Methods of extracting casein fractions from milk and caseinates and production of novel products. Hanna Research Institute, 2007

- **POST et al.** β-Casein as a bioactive precursor- Processing for purification. *Aust. J. Dairy Technol.*, 2009, vol. 64, 84-88
- **POST** ; **HINRICHS**. Large-scale isolation of food-grade β-casein. *Milchwissenschaft*, 2011, vol. 66, 361-364
- Food Biotechnology in the United States: Science, Regulation, and Issues. U.S. Department of State, 14 August 2006
- **DEOTALE et al.** Characteristics of beverages and Its Relevance to Food Processing. *Food Eng Rev*, 2020, vol. 12, 229-250
- **MOHANYTU et al.** Emulsifying and Foaming Properties of Acidic Caseins and Sodium Caseinate. *Food Chemistry*, 1988, vol. 28, 17-30
- **GAUDING et al.** Engineering of caseins and modulation of their structures and interactions. *Biotechnology Advances*, 2009, vol. 27, 1124-1131
- Interfacial, Emulsifying and foaming properties of milk proteins. **DICKINSON**. Advanced Dairy Chemistry. Kluwer Academic/Plenum Publishers, 2003, vol. 1
- **BROYARD** ; **GAUCHERON**. Modifications of structures and functions of caseins: a scientific and technological challenge. *Dairy Sci. & Technol*, 2015, vol. 95, 831-862
- **PEI** ; **SCHMIDT**. Ice cream: foam formation and stabilization - A review. *Food Reviews International*, 2010, vol. 26, 122-137
- **PETKOVA et al.** Characterization of Fruit Sorbet Matrices with Added Value from Ziziphus jujuba and Stevia rebaudiana. *Foods*, September 2022, vol. 11 (18), 2748
- **LIM et al.** High Hydrostatic Pressure modification of whey protein concentrate for Improved Functional Properties. *Journal of Dairy Science*, 2008, vol. 91 (4)
- **O'CHIU** ; **VARDHANABHUTI**. Utilizing whey protein isolate and polysaccharide complexes to stabilize aerated dairy gels. *Journal of Dairy Science*, 2017, vol. 100 (5)
- **RAYMUNDO et al.** Method to evaluate foaming performance. *Journal of Food Engineering*, 1998, vol. 36, 445-452
- **GODA et al.** Recombinant expression analysis of natural and synthetic bovine alpha-casein in Escherichia coli. *Appl Microbiol Biotechnol*, 2000, vol. 54, 671-676
- **KIM et al.** High-level expression of bovine beta-lactoglobulin in Pichia pastoris and characterization of its physical properties. *Protein Eng*, 1997, vol. 10 (11), 1339-45
- **KIM et al.** Production of human caseinomacropeptide in recombinant Saccharomyces cerevisiae and Pichia Pastoris. *J Ind Microbiol. Biotechnology*, 2005, vol. 32, 402-408
- **CHOI BK** ; **JIMENEZ-FLORES R**. Expression ad purification of Glycosylated Bovine b-casein (L70S/P71S) in Pichia Pastoris. *J Agric Food Chem*, 2001, vol. 49, 1761-1766
- **VIAENE et al.** Efficient expression of bovine alpha-lactalbumin in Saccharomyces cerevisiae. *Eur J Biochem*, 1991, vol. 202 (2), 471-7
- **BAGHBAN et al.** Yeast Expression Systems: Overview and Recent Advances. *Mol Biotechnol*, May 2019, vol. 61 (5), 365-384
- **YANG** ; **ZHANG**. Engineering strategies for enhanced production of protein and bioproducts in Pichia pastoris: A review. *Biotechnol. Adv.*, January 2018, vol. 36 (1), 182-195
- **MOJZITA et al.** Gene expression engineering in fungi. *Curr. Opin. Biotechnol*, October 2019, vol. 59, 141-149
- **GÓMEZ et al.** Alternative Eukaryotic Expression Systems for the Production of Proteins and Protein Complexes. *Adv Exp Med Biol*, 2016, vol. 896, 167-84
- **FREUDL**. Signal peptides for recombinant protein secretion in bacterial expression systems. *Microb Cell Fact*, 29 March 2018, vol. 17 (1), 52
- **CUI et al.** Exploitation of Bacillus subtilis as a robust workhorse for production of heterologous proteins and beyond. *World J Microbiol Biotechnol.*, 10 September 2018, vol. 34 (10), 145
- **CHEN**. Bacterial expression systems for recombinant protein production: E. coli and beyond. *Biotechnol Adv*, September 2012, vol. 30 (5), 1102-7
- **DECKERS et al.** Genetically Modified Micro-Organisms for Industrial Food Enzyme Production: An Overview. *Foods*, 2020, vol. 9, 326
- **WALSTRA et al.** Dairy Science and Technology. Taylor and Francis Group, 2006
- Non bovine caseins quantitative variability and molecular diversity. **MARTIN et al.** Advances in Dairy Chemistry - Proteins. Springer, 2003, vol. 1, 227-310
- **MACEK et al.** Protein post-translational modifications in bacteria. *Nat Rev Microbiol*, 2019, vol. 17, 651-664